# EUROPEAN PATENT APPLICATION

(11) **EP 4 712 537 A1**
(43) Date of publication of application: **18.03.2026**
(21) Application number: 24803346.6
(22) Date of filing: 17.04.2024
(51) Int. Cl.: H04W 16/28, H04L 27/26, H04W 28/18, H04W 72/23, H04W 84/12

(54) **ACCESS POINT, TERMINAL, AND COMMUNICATION METHOD**

(30) Priority: 09.05.2023 JP 2023077170
(71) Applicant: Panasonic Intellectual Property Corporation of America, Torrance, CA 90504 (US)
(72) Inventor: IWAI, Takashi, Kadoma-shi, Osaka 571-0057 (JP); TAKATA, Tomofumi, Kadoma-shi, Osaka 571-0057 (JP); URABE, Yoshio, Kadoma-shi, Osaka 571-0057 (JP); MOTOZUKA, Hiroyuki, Kadoma-shi, Osaka 571-0057 (JP)
(74) Representative: Grünecker Patent- und Rechtsanwälte PartG mbB
(86) International application number: PCT/JP2024/015245
(87) International publication number: WO 2024/232231

(57) **Abstract**

This access point comprises: a control circuit in which, in a control signal including common information common to a plurality of terminals and terminal-specific information specific to a plurality of terminals, one piece of terminal-specific information includes control information instructing to transmit or receive, using different spatial streams, data equal to or less than a prescribed number to which a different modulation encoding method is applied; and a transmission circuit that transmits the control signal.

## Description

### Technical Field

The present disclosure relates to an access point, a terminal, and a communication method.

### Background Art

As a successor to IEEE 802.11ax (hereinafter, referred to as "11ax"), which is a standard of IEEE 802.11, the Institute of Electrical and Electronics Engineers (IEEE) is proceeding with the development of technical specifications for IEEE 802.11be (hereinafter, referred to as "11be"). 11ax is also referred to as "High Efficiency (HE)," and 11be is also referred to as "Extremely High Throughput (EHT)." In addition, in an Ultra High Reliability (UHR) Study Group (SG), discussions on requirements specification for a successor standard to 11be (hereinafter, referred to as "UHR") are in progress.

### Citation List

### Non-Patent Literature

NPL 1
   IEEE 802.11-23/0060r1, Layered QoS multi-layer transmission follow-up
NPL 2
   IEEE 802.11-22/1930r0, Layered QoS multi-layer transmission
NPL 3
   IEEE P802.11 be/D3.0

### Summary of Invention

However, a method for controlling signal transmission in radio communication such as a wireless LAN has not been sufficiently studied.

Anon-limiting embodiment of the present disclosure facilitates providing an access point, a terminal, and a communication method each capable of improving the efficiency of transmission control in radio communication.

An access point according to an embodiment of the present disclosure includes: control circuitry, which, in operation, includes, in a control signal including terminal-common information common to a plurality of terminals and terminal-specific information specific to each of the plurality of terminals, control information in one piece of the terminal-specific information, the control information indicating that data which are less than or equal to a predetermined number and to which modulation and coding schemes different from each other are applied, are transmitted or received using spatial streams different from each other; and transmission circuitry, which, in operation, transmits the control signal.

It should be noted that general or specific embodiments may be implemented as a system, an apparatus, a method, an integrated circuit, a computer program, a storage medium, or any selective combination thereof.

According to an embodiment of the present disclosure, it is possible to improve the efficiency of transmission control in radio communication, for example.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an example of Multi-layer transmission;
FIG. 2 is a diagram illustrating an example of a Trigger Frame;
FIG. 3 is a diagram illustrating an example of a Common Info field;
FIG. 4 is a diagram illustrating an example of a User Info field;
FIG. 5 is a diagram illustrating an example of a User Info field (Basic Trigger);
FIG. 6 is a diagram illustrating an example of a Special User Info field;
FIG. 7 is a diagram illustrating an example of an Extremely High Throughput (EHT) Multi-User (MU) PHY Protocol Data Unit (PPDU) format;
FIG. 8 is a diagram illustrating an example of a User field format for a non-MU-Multiple Input Multiple Output (MIMO) allocation;
FIG. 9 is a block diagram illustrating a part of a configuration example of an AP;
FIG. 10 is a block diagram illustrating a part of a configuration example of a terminal;
FIG. 11 is a block diagram illustrating a configuration example of the AP;
FIG. 12 is a block diagram illustrating a configuration example of the terminal;
FIG. 13 is a diagram illustrating an example of a Spatial Stream (SS) mapping table;
FIG. 14 is a diagram illustrating an example of a User Info field (in single-layer transmission);
FIG. 15 is a diagram illustrating an example of a User Info field (in multi-layer transmission);
FIG. 16 is a diagram illustrating an example of a User Info field (in multi-layer transmission);
FIG. 17 is a diagram illustrating a notification example of a Modulation and Coding Scheme;
FIG. 18 is a diagram illustrating an example of a User Info field;
FIG. 19 is a diagram illustrating an example of a User Info field;
FIG. 20 is a diagram illustrating an example of a User Info field;
FIG. 21 is a diagram illustrating an example of an SS mapping table;
FIG. 22 is a diagram illustrating an example of a User Info field;
FIG. 23 is a diagram illustrating an example of an SS mapping table;
FIG. 24 is a diagram illustrating an example of an SS mapping table;
FIG. 25 is a diagram illustrating an example of an SS mapping table;
FIG. 26 is a diagram illustrating an example of an SS mapping table;
FIG. 27 is a block diagram illustrating a part of a configuration example of an AP;
FIG. 28 is a block diagram illustrating a part of a configuration example of a terminal;
FIG. 29 is a block diagram illustrating a configuration example of the AP;
FIG. 30 is a block diagram illustrating a configuration example of the terminal;
FIG. 31 is a diagram illustrating an example of an SS mapping table;
FIG. 32 is a diagram illustrating an example of a User Field format;
FIG. 33 is a diagram illustrating an example of a User Info field;
FIG. 34 is a diagram illustrating an example of an SS mapping table; and
FIG. 35 is a diagram illustrating an example of PPDU generation procedures.

### Description of Embodiments

Hereinafter, embodiments of the present disclosure will be described in detail with reference to the accompanying drawings.

In 11ax and 11be, a single packet (referred to as PHY protocol data unit (PPDU)) transmitted and received between an AP (Access point, also referred to as "AP STA" or "base station") and a terminal (Station, STA, also referred to as "Non-AP STA") includes a single piece of data (for example, PHY Service Data Unit (PSDU)). The AP or the STA applies one modulation and coding method (for example, also referred to as modulation and coding scheme (MCS)) to the PSDU to transmit the data.

In UHR, a method (hereinafter, referred to as "multi-layer transmission") for applying individual transmission parameters (for example, different MCSs) to different data (for example, a plurality of PSDUs) included in a PPDU has been proposed (for example, see NPLs 1 and 2).

In non-limiting embodiments of the present disclosure, a method for improving the efficiency of multi-layer transmission will be described.

### [Multi-Layer Transmission Using Spatial Streams]

In the embodiment of the present disclosure, a method for controlling a multi-layer transmission in which a plurality of PSDUs is assigned to different spatial streams (hereinafter, referred to as "SS") will be described.

Multi-layer transmission using different SSs in the embodiment of the present disclosure will be described below.

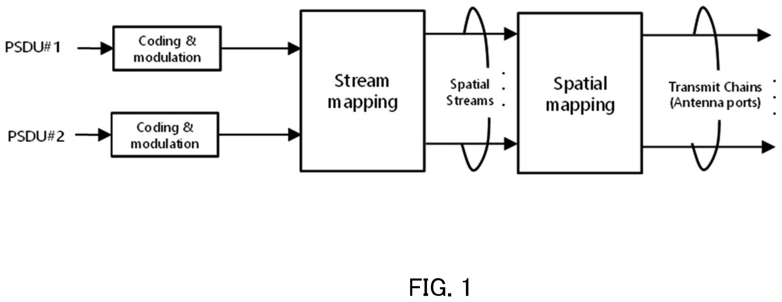

FIG. 1 illustrates an outline of processing of a transmitter (terminal in uplink communication, and AP in downlink communication).

In the example of FIG. 1, the transmitter configures (or restricts) the number of PSDUs to be included in one PPDU to two (for example, PSDU#1 and PSDU#2). The number of PSDUs to be included in one PPDU is not limited to two.

In FIG. 1, the coding & modulation processor encodes and modulates each PSDU using a predetermined MCS. The MCS is configured with a suitable parameter based on, for example, the required quality of each PSDU and the reception quality of the SS to which the PSDU is assigned. For example, an individual MCS (for example, different MCS) can be configured for each PSDU.

The stream mapper assigns (maps) the two PSDU signals after the encoding and the modulation to the SSs (for example, SS numbers). The number of SSs is, for example, less than or equal to the number of antennas of a transmitter or a receiver, and the number of SSs expected to maximize the total throughput in all the SSs may be calculated by the scheduler of the AP.

The spatial mapper multiplies signals corresponding to the number of SSs by a precoding matrix with dimensions of the number of SSs × the number of transmission antennas (also referred to as the number of transmit chains or the number of antenna ports) (performs a linear operation), and assigns the signals corresponding to the number of SSs to the transmission antennas. The precoding matrix may be, for example, a matrix computed by the transmitter based on propagation path information to reduce interference between SSs. Alternatively, the transmitter may use a precoding matrix fed back from the receiver.

The signals corresponding to the number of transmission antennas from the spatial mapper are assigned to a predetermined frequency band, and modulated by orthogonal frequency division multiplexing (OFDM). Then, radio transmission processing is performed on the signals, and the signals are transmitted via antennas.

In the multi-layer transmission using spatial streams, as the number of PSDUs assigned to one terminal increases, the throughput is expected to be improved by applying the MCS suitable for the required quality of each PSDU or the channel quality of the SS to which each PSDU is assigned. Meanwhile, the improvement effect on the throughput due to the increase in the number of PSDUs decreases as the number of PSDUs increases. For example, the improvement effect when the number of PSDUs is increased from one to two is greater than the improvement effect when the number of PSDUs is increased from two to three.

In addition, in the multi-layer transmission using spatial streams, the number of PSDUs to be transmitted needs to be less than or equal to the number of SSs. On the other hand, in an area where the reception quality (for example, signal to interference and noise ratio (SINR)) is low, a small number of SSs is applied even when the terminal has a large number of antennas, and a higher throughput can be obtained by improving the reception quality per SS. For example, even in a case where the assignment of four PSDUs to one terminal is supported, the area to which four or more SSs can be applied is a limited communication environment of a high SINR area, and thus the improvement effect on throughput can be expected for only some of the terminals. Therefore, increasing the number of PSDUs per terminal may cause the overall quality to deteriorate.

In addition, as the number of PSDUs increases, the overhead increases. As the number of PSDUs increases, the control information for indicating transmission and reception data from an AP to a terminal and the feedback information from the terminal to the AP (for example, channel quality information for each SS) increase, and the control information and the feedback information may be overhead. In addition, as the number of PSDUs increases, the implementation becomes more complex.

Therefore, in consideration of the throughput performance, the overhead, and the complexity of the implementation, it is desired to configure (or restrict) the number of PSDUs assigned to one terminal to a predetermined number (for example, 2) or less.

Multi-layer transmission using spatial streams has been described above.

In an embodiments of the present disclosure, control information is included in one piece of terminal information (for example, one piece of terminal-specific information) in a control signal including "terminal-common information" and "terminal-specific information" indicating, by an AP, data transmission or reception of a terminal. The control information indicates that data (for example, PSDU) which are less than or equal to a predetermined number (for example, two) and to which different MCSs are applied, are transmitted using different spatial streams (SSs).

For example, in the embodiment of the present disclosure, multi-layer transmission using different spatial streams from an AP to a terminal is controlled by a method obtained by improving the control signal in 11ax and 11be.

In the following, the control signal in 11ax and 11be will be described.

In 11ax and 11be, an AP transmits a control signal (hereinafter, referred to as a "Trigger frame (TF)") to a terminal to indicate the transmission of an uplink signal to the terminal. The Trigger frame includes a control signal including "terminal-common information" that is information common to a plurality of terminals and "terminal-specific information" that is information specific to each of the terminals as shown below, and indicates uplink transmission to the terminals.

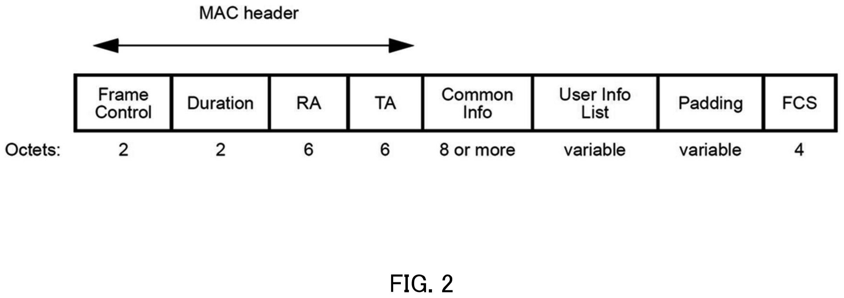

FIG. 2 is a diagram illustrating an example of the Trigger frame.

As illustrated in FIG. 2, the Trigger frame includes, for a plurality of terminals targeted for frequency-multiplexing, a field including information common to the plurality of terminals (terminal-common information) (referred to as "Common Info field"), and a field referred to as a "User Info List." The User Info List field may include one or more fields including information individual (or specific) to a terminal (terminal-specific information) (referred to as "user information fields (User Info fields)").

Further, for example, in 11be, the Trigger frame may include a field including information for a terminal supporting 11be (EHT) (for example, "Special User Info field") (not shown).

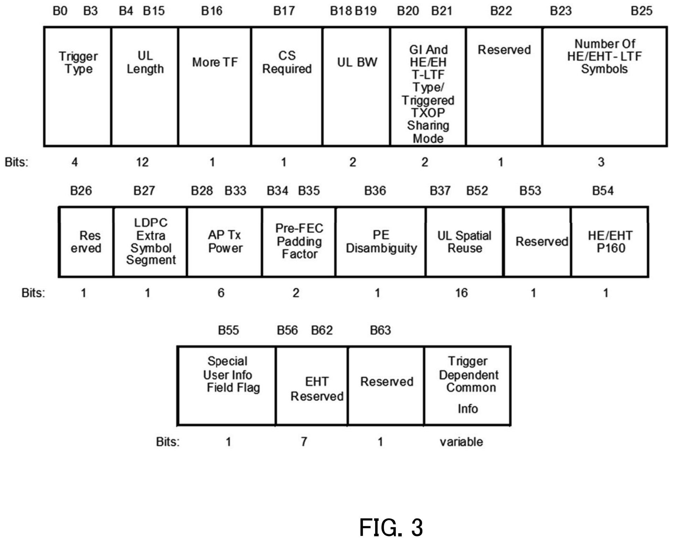

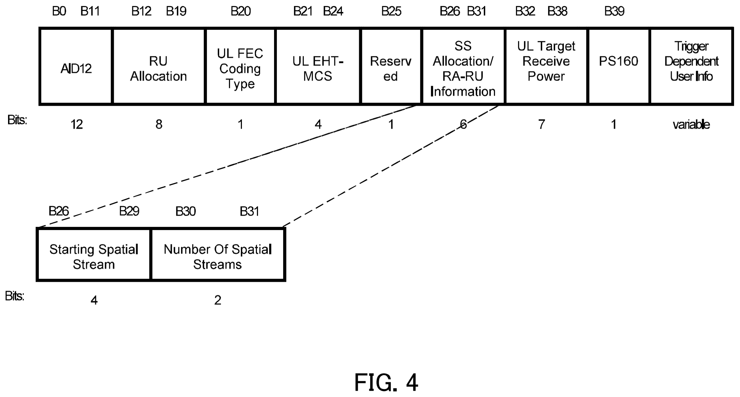

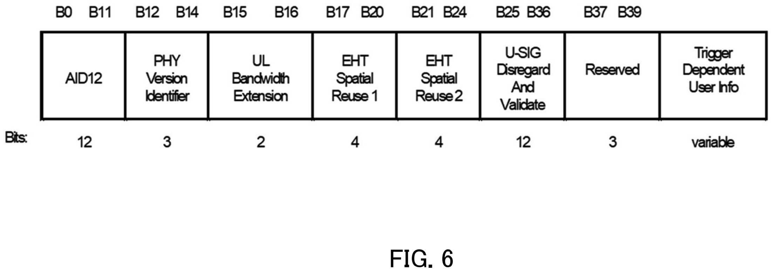

FIG. 3 is a diagram illustrating a configuration example of terminal-common information (Common Info field) discussed in 11be (for example, EHT) (for example, see NPL 3). In addition, FIG. 4 is a diagram illustrating a configuration example of terminal-specific information (User Info field) discussed in 11be (EHT) (for example, see NPL 3). Moreover, FIG. 6 is a diagram illustrating a configuration example of a Special User Info field (for example, see NPL 3).

As illustrated in FIG. 4, an SS Allocation subfield in B26 to B31 of the User Info field is composed of a starting SS number (Starting Spatial Stream subfield) and the number of SSs (Number Of Spatial Streams) used by a terminal. The number of SSs from 1 to 4 can be indicated from the AP to each terminal using two bits in B30 to B31.

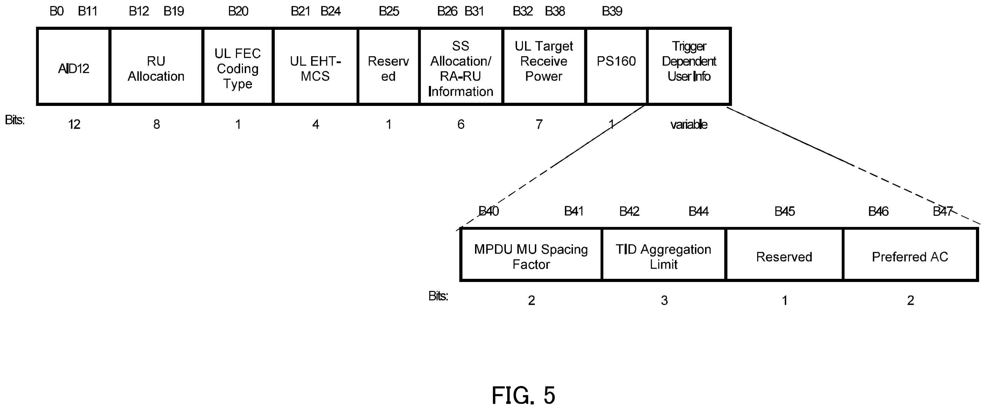

In addition, FIG. 5 illustrates an example of the User Info field in a case where the Trigger type of the Common Info field is "Basic" (referred to as Basic Trigger). As illustrated in FIG. 5, a "Trigger Dependent User Info subfield," which has a configuration variable depending on the trigger type, is configured with eight bits in a case where the trigger type is "Basic," and B45 is a reserved bit.

In 11ax and 11be, the AP transmits a control signal (hereinafter, referred to as "Preamble") to a terminal to indicate the reception of a downlink signal to the terminal. The Preamble includes a control signal including terminal-common information and terminal-specific information as described below to indicate the uplink transmission.

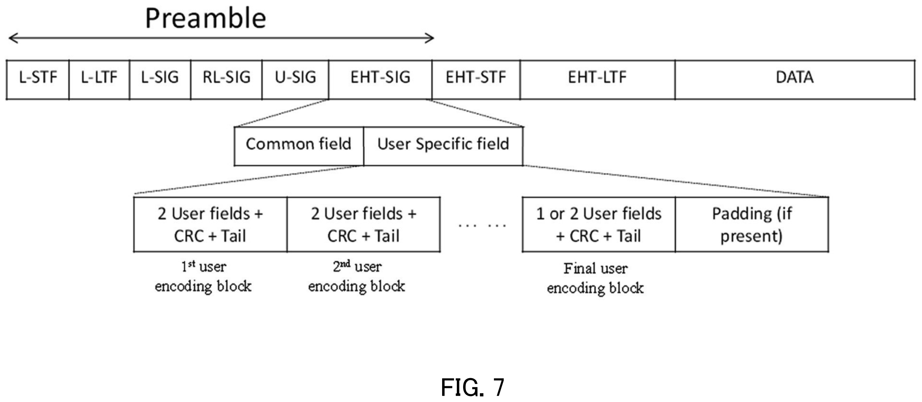

FIG. 7 is a diagram illustrating an example of a PPDU format of a downlink signal in 11be (EHT MU PPDU format) (for example, see NPL 3).

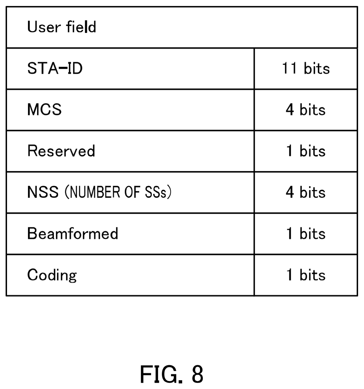

As illustrated in FIG. 7, in the EHT MU PPDU format, a Preamble including control information for a terminal to receive a downlink data signal (DATA in FIG. 7) is transmitted in the first half. The Preamble includes an EHT-SIG field, and the EHT-SIG field is composed of a Common field including common information between terminals that receive the downlink data and one or more User fields including terminal-specific information. The format of each User field is variable depending on, for example, a data transmission method. For example, in the case of non-MU-MIMO allocation, a user field format illustrated in FIG. 8 is used. In the user field format illustrated in FIG. 8, the number of SSs (NSS) from 1 to 16 can be indicated to the terminal using four bits.

In the embodiment of the present disclosure, by configuring (restricting) the number of PSDUs and the number of MCSs to be assigned to one PPDU to a predetermined number (for example, a maximum of two), and indicating them using one piece of terminal information (User Info field in the Trigger frame or User field in the Preamble), the AP can reduce overhead, thereby indicating multi-layer transmission using different SSs with an easy implementation.

In addition, by indicating information on multi-layer transmission by one piece of terminal information, the increase in the amount of signaling from 11ax and 11be can be suppressed.

In addition, similarly to the reception processing in 11ax and 11be, a control signal addressed to each terminal is indicated in one piece of terminal information, so that the terminal can complete the reception processing after decoding the control signal addressed to the terminal and can start the next processing (for example, uplink signal transmission or downlink signal reception). For example, in a case where multi-layer transmission to one terminal is indicated by using a plurality of pieces of terminal information, the terminal needs to receive and decode all the terminal information, thus complicating the implementation.

Hereinafter, an operation example of multi-layer transmission according to the embodiment of the present disclosure will be described.

### (Embodiment 1)

In the present embodiment, an operation example of multi-layer transmission on the uplink will be described.

For example, a control example from an AP to a terminal for uplink multi-layer transmission will be described. The AP controls uplink multi-layer transmission using different spatial streams by a method obtained by improving a Trigger frame that indicates the transmission of an uplink signal used in 11ax and 11be, for example.

Note that, in the present embodiment, the transmission of a downlink signal is assumed to be the existing single-layer transmission. In the downlink transmission, multi-layer transmission may be applied as in Embodiment 2 described below.

### [Configuration of Radio Communication System]

The radio communication system according to the present embodiment may include, for example, AP 100 and terminal 200.

AP 100 transmits, to terminal 200, a control signal (for example, Trigger frame) including terminal-common information and terminal-specific information that indicate uplink multi-layer transmission to terminal 200. The Trigger frame may include, in one piece of terminal information (User Info field), control information indicating that data (PSDU) which are less than or equal to a predetermined number (for example, two or less) and to which MCSs are applied, are transmitted by using different spatial streams (SSs).

Terminal 200 receives the Trigger frame, applies the indicated MCSs to the predetermined number of PSDUs based on the indication by the received Trigger frame, and transmits, to AP 100, uplink multi-layer signals in which the PSDUs after the encoding and the modulation are assigned to the different spatial streams (SSs).

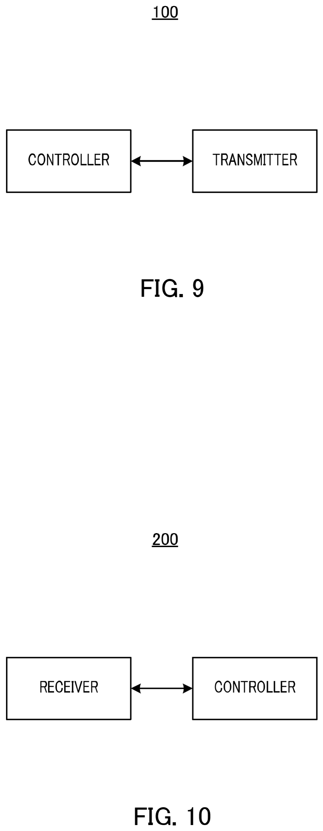

FIG. 9 is a block diagram illustrating a configuration example of a part of AP 100 according to the embodiment of the present disclosure. In AP 100 illustrated in FIG. 9, a controller (for example, corresponding to control circuitry) includes, in a control signal (for example, Trigger frame) including terminal-common information common to a plurality of terminals and terminal-specific information specific to each of the terminals, control information in one piece of terminal-specific information (for example, User Info field). The control information indicates that data (for example, PSDU) which are less than or equal to a predetermined number and to which different modulation and coding schemes (MCS) are applied, are transmitted by using different spatial streams (SSs) (for example, multi-layer transmission). The transmitter (corresponding to, for example, transmission circuitry) transmits the control signal.

FIG. 10 is a block diagram illustrating a configuration example of a part of terminal 200 according to an embodiment of the present disclosure. In terminal 200 illustrated in FIG. 10, a receiver (for example, corresponding to reception circuitry) receives a control signal (for example, Trigger frame) including terminal-common information common to a plurality of terminals and terminal-specific information specific to each of the terminals. The control signal includes, in one piece of terminal-specific information (for example, User Info field), control information indicating that data which are less than or equal to a predetermined number and to which different modulation and coding schemes (MCS) are applied, are transmitted by using different spatial streams (SSs) (for example, multi-layer transmission). The controller (for example, corresponding to control circuitry) controls the transmission of the data based on the control signal. Terminal 200 illustrated in FIG. 10 may include a transceiver (not shown) instead of the receiver. The transceiver may have a data transmission function (for example, a function of transmitting a multi-layer PPDU illustrated in FIG. 1) in addition to the function of the receiver.

### [Configuration Example of AP 100]

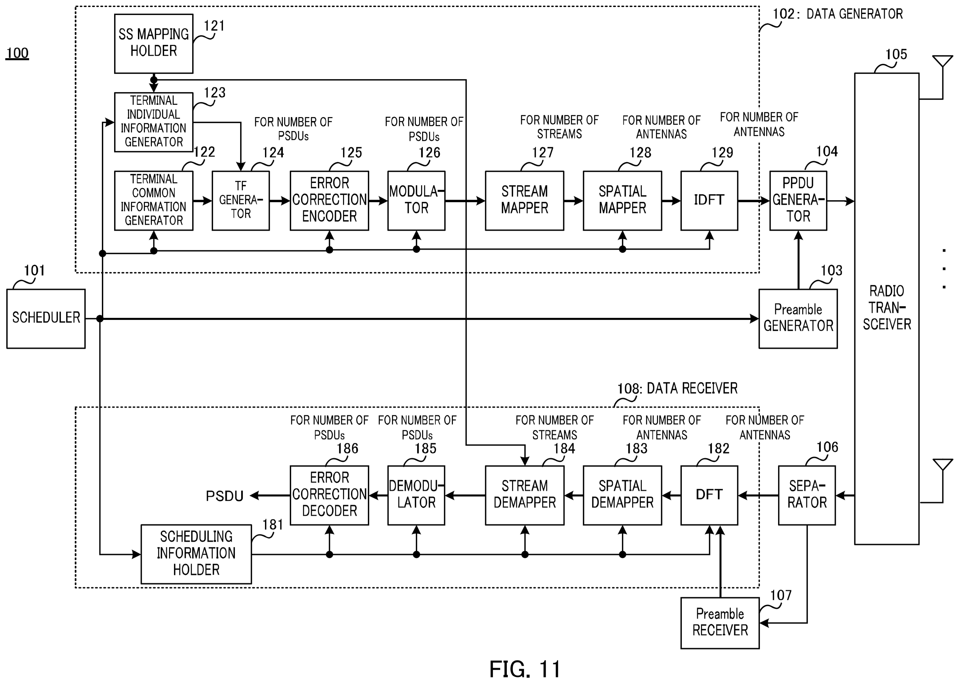

FIG. 11 is a block diagram illustrating a configuration example of AP 100.

AP 100 illustrated in FIG. 11 may include, for example, scheduler 101, data generator 102, Preamble generator 103, PPDU generator 104, radio transceiver 105, separator 106, Preamble receiver 107, and data receiver 108.

Note that at least one of scheduler 101, data generator 102, Preamble generator 103, PPDU generator 104, separator 106, Preamble receiver 107, and data receiver 108 illustrated in FIG. 11 may be included in the controller illustrated in FIG. 9, and radio transceiver 105 illustrated in FIG. 11 may be included in the transmitter illustrated in FIG. 9.

In FIG. 11, scheduler 101 may schedule terminal 200, for example. For example, scheduler 101 determines scheduling information on an uplink signal for one or more terminals including terminal 200 based on reception quality information, a transmit buffer state, terminal capability information, or the like fed back from terminal 200.

The scheduling information may include, for example, information on a radio resource (for example, including at least one of a transmission bandwidth and a signal length) to be assigned to terminal 200, and the MCS and the number of spatial streams (SSs) to be applied to the uplink signal.

The transmission bandwidth to be assigned to terminal 200 may be configured to be at least a part of the transmission bandwidth of a downlink PPDU including a Trigger frame, for example. In addition, for example, in a case where multi-layer transmission is applied, the transmission bandwidth of multi-layer transmission may be configured (or limited) to a predetermined bandwidth (for example, 20 MHz × N (N is a natural number) or a natural multiple of a bandwidth on which a carrier sense is performed). In addition, in a case where AP 100 does not dynamically monitor the transmit buffer state or the reception quality of terminal 200, scheduler 101 may assign a radio resource to terminal 200 with predetermined periodicity.

In addition, for the number of SSs, scheduler 101 may, for example, calculate the number of SSs that results in the highest total throughput among all the SSs from one to the maximum number of SSs (for example, any of the number of reception antennas of AP 100 and the number of transmission antennas of terminal 200 that is smaller) based on the feedback information or the like, and select the number of SSs.

In addition, scheduler 101 determines the MCS for each PSDU. For example, scheduler 101 determines the MCS that satisfies the required quality of the PSDU based on the average SINR of the SS number to which each PSDU is assigned by a predetermined rule described later.

Scheduler 101 outputs the determined scheduling information for terminal 200 to data generator 102, Preamble generator 103, and data receiver 108 (for example, scheduling information holder 181).

Data generator 102 generates downlink data. Data generator 102 may include, for example, SS mapping holder 121, terminal-common information generator 122, terminal-specific information generator 123, TF generator 124, error correction encoder 125, modulator 126, Stream mapper 127, Spatial mapper 128, and Inverse Discrete Fourier transform (IDFT) processor 129.

For example, SS mapping holder 121 holds information (for example, information in a mapping table format) that is predefined and uniquely associates the number of SSs and the number of PSDUs. SS mapping holder 121 outputs the held information on the mapping table between the number of SSs and the number of PSDUs to terminal-specific information generator 123 and data receiver 108 (for example, stream demapper 184 to be described later).

The mapping table between the number of SSs and the number of PSDUs may be defined by a standard (Spec) or may be configured for each AP 100. One mapping table between the number of SSs and the number of PSDUs may be defined, or a plurality of mapping tables may be defined. In a case where a plurality of mapping tables is defined, for example, AP 100 may switch the mapping table to be applied according to the communication condition. In a case where one mapping table is defined, the notification from AP 100 to terminal 200 of the mapping table to be applied is not needed, thus reducing signaling. In a case where a plurality of mapping tables is defined and AP 100 switches the mapping table to be applied, the suitable multi-layer transmission can be applied according to the communication condition (the receiver configuration of the base station, the uplink reception quality, and the like), thus improving throughput.

Terminal-common information generator 122 generates control information included in a Common Info Field (for example, FIG. 3) common to a plurality of terminals including terminal 200, and control information included in a Special User Info Field (for example, FIG. 6) common to the terminals with a predetermined PHY version (for example, EHT or UHR).

Terminal-common information generator 122 may generate information on a Trigger type subfield based on the allocation information on the radio resource input from scheduler 101, for example. The Trigger Type subfield is a subfield that indicates, for example, the type of the Trigger frame (for example, type of a signal that AP 100 causes terminal 200 to transmit). For example, AP 100 may indicate the Trigger Type as "Basic" and indicate multi-layer transmission in the User Info field (Configuration Example 1 to be described later).

The Trigger Type may be another Trigger Type different from the Basic, or may be a newly defined Trigger Type (for example, referred to as "Multi-layer type") that specifies multi-layer transmission on the uplink (Configuration Example 2 to be described later).

The Trigger Type may be configured to Basic, and information (for example, PHY Version = UHR) that specifies application of a PHY version supporting indication of multi-layer transmission may be indicated in the PHY Version Identifier subfield of the Special User Info field (Configuration Example 3 to be described later).

Terminal-common information generator 122 outputs the information on the generated Common Info field and the Special User Info field to TF generator 124.

The term "configuration" of a field (e.g., subfield) in the Trigger frame may be replaced with another term such as "definition" or "interpretation," for example.

Terminal-specific information generator 123 generates control information included in a User Info field (for example, FIG. 4) specific to terminal 200. Terminal-specific information generator 123 may generate information on the User Info field specific to terminal 200 based on the scheduling information from scheduler 101 and the mapping table between the number of SSs and the number of PSDUs from SS mapping holder 121, in accordance with a predetermined format, and generate information on a User Info List including the User Info field for each of terminals 200. Terminal-specific information generator 123 outputs the information on the User Info List to TF generator 124. An operation example of terminal-specific information generator 123 will be described below.

TF generator 124 may generate a Trigger frame including the information on the Common Info field or the Special User Info field input from terminal-common information generator 122 and the information on the User Info List (for example, at least one User Info field) input from terminal-specific information generator 123, based on the format illustrated in FIG. 2, for example. The Trigger frame may include, for example, at least one of a MAC header, Padding, and a frame check sequence (FCS), in addition to the Common Info field and the User Info List. TF generator 124 outputs the generated Trigger frame to error correction encoder 125, for example. Note that the Trigger frame generated by TF generator 124 corresponds to a PSDU.

Error correction encoder 125 performs error correction encoding on the transmission data signal (one PSDU herein, since single-layer transmission is assumed in the downlink transmission) including the Trigger frame input from TF generator 124, based on the scheduling information (for example, coding rate) input from scheduler 101, and outputs the encoded signal to modulator 126.

Modulator 126 performs modulation processing on the one PSDU signal after the encoding input from error correction encoder 125, based on the scheduling information (for example, modulation scheme) input from scheduler 101, and outputs the modulated signal to stream mapper 127.

Stream mapper 127 divides the one PSDU signal after the modulation according to the number of SSs and maps each divided portion to the corresponding SS number. For example, the number of SSs (also referred to as the number of ranks) that results in maximizing the downlink throughput may be selected based on the feedback information from terminal 200 and the downlink reception quality estimated from the uplink reception quality. Stream mapper 127 assigns (divides) the modulated Trigger frame signal to the calculated number of SSs, and outputs the stream signals corresponding to the number of SSs to spatial mapper 128.

Spatial mapper 128 multiplies the stream signals corresponding to the number of SSs, input from stream mapper 127, by a precoding matrix with dimensions of the number of SSs × the number of transmission antennas (also referred to as the number of transmit chains or the number of antenna ports) (performs a linear operation), and outputs the signals corresponding to the number of transmission antennas to IDFT processor 129.

IDFT processor 129 maps each of the signals corresponding to the number of transmission antennas input from spatial mapper 128 to a predetermined transmission bandwidth based on the scheduling information from scheduler 101, performs an IDFT to convert the signals to a time waveform, and adds a cyclic prefix (CP), thereby generating OFDM signals. IDFT processor 129 outputs the calculated OFDM signals corresponding to the number of transmission antennas as data signals to PPDU generator 104.

Preamble generator 103 generates a Preamble to be added to the data addressed to terminal 200, based on the scheduling information from scheduler 101. The Preamble includes, for example, information used by terminal 200 to receive and decode the data. Preamble processor 103 replicates the generated Preamble signal for the number of transmission antennas, and outputs the signals to PPDU generator 104.

PPDU generator 104 generates one PPDU signal obtained by time-multiplexing the Preamble signal from Preamble generator 103 and the OFDM signal from IDFT processor 129 for each transmission antenna (for example, multiplexing in the order of the Preamble signal and the OFDM signal), and outputs the PPDU signal to radio transceiver 105.

Radio transceiver 105 performs radio transmission processing, such as a D/A conversion and an up-conversion to a carrier frequency, on the PPDU signal input from PPDU generator 104 for each transmission antenna, and transmits the signals after the radio transmission processing to terminal 200 via antennas. Radio transceiver 105 receives a signal transmitted from terminal 200, for example, via the antennas, performs radio reception processing, such as a down-conversion to a baseband and an A/D conversion, on the received signal, and outputs a signal after the radio reception processing to separator 106.

Separator 106 separates the signal (PPDU) input from radio transceiver 105 into a Preamble signal and a data signal, outputs the Preamble signal to Preamble receiver 107, and outputs the data signal to data receiver 108 (for example, DFT processor 182).

Preamble receiver 107 demodulates and decodes the Preamble signal input from separator 106, and indicates decoding of the data to data receiver 108 (for example, DFT processor 182) when the signal is a signal from terminal 200 to AP 100.

Data receiver 108 performs, for example, uplink data reception processing. Data receiver 108 may include, for example, scheduling information holder 181, Discrete Fourier transform (DFT) processor 182, spatial demapper 183, stream demapper 184, demodulator 185, and error correction decoder 186.

Data receiver 108 (for example, DFT processor 182) proceeds to the data reception processing when the received signal is determined to be the signal to AP 100.

Scheduling information holder 181 holds the scheduling information input from scheduler 101, for example, and outputs the scheduling information to each of the components of data receiver 108 as needed.

DFT processor 182 removes a cyclic prefix (CP) from each of the data signals corresponding to the number of reception antennas input from separator 106 and performs a DFT to convert the data signals into frequency domain signals. DFT processor 182 then demaps (extracts) the signals from terminal 200 from a predetermined transmission bandwidth, based on the scheduling information (for example, radio resource information) on the uplink signal for terminal 200 input from scheduling information holder 181. DFT processor 182 outputs the extracted data signals corresponding to the number of reception antennas to spatial demapper 183.

Spatial demapper 183 calculates a postcoding matrix (also referred to as a reception weight) with dimensions of the number of SSs × the number of reception antennas based on the scheduling information (for example, the number of SSs) for terminal 200 input from scheduling information holder 181, by using a reference signal (for example, short training field (STF) and long training field (LTF)) for data demodulation included in the data signals. Then, spatial demapper 183 calculates the stream signals corresponding to the number of SSs by multiplying the data signals input from DFT processor 182 by the postcoding matrix, and outputs the calculated stream signals to stream demapper 184.

Stream demapper 184 extracts one or more PSDU signals from the stream signals corresponding to the number of SSs based on the mapping table between the number of SSs and the number of PSDUs from SS mapping holder 121. For example, in a case where uplink multi-layer transmission is applied and one PSDU is assigned to a plurality of SSs, stream demapper 184 combines a plurality of stream signals corresponding to the predetermined SS numbers to generate one PSDU. Stream demapper 184 outputs the extracted one or more PSDU signals to demodulator 185.

Demodulator 185 performs demodulation processing on the one or more (two or more in the case of multi-layer transmission) PSDU signals before demodulation input from stream demapper 184, based on the scheduling information (for example, modulation scheme) for terminal 200 input from scheduling information holder 181, and outputs the one or more PSDU signals after the demodulation to error correction decoder 186.

Error correction decoder 186 decodes the one or more PSDU signals input from demodulator 185, for example, based on the scheduling information for terminal 200 (for example, coding rate) input from scheduling information holder 181, and obtains one or more PSDUs from terminal 200.

### [Configuration Example of Terminal 200]

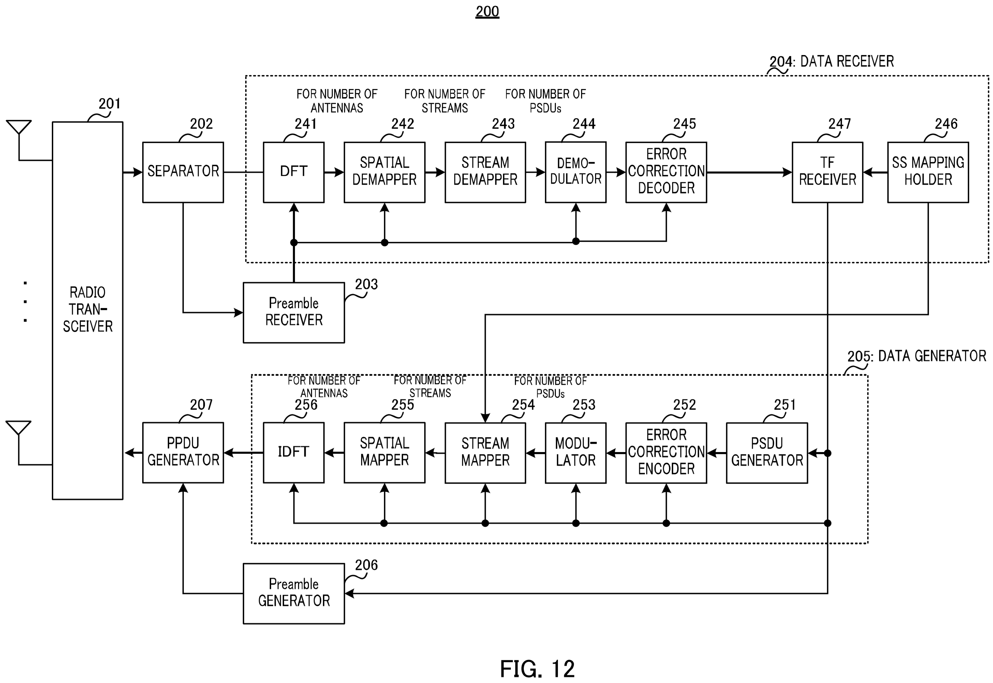

FIG. 12 is a block diagram illustrating a configuration example of terminal 200.

Terminal 200 illustrated in FIG. 12 may include, for example, radio transceiver 201, separator 202, Preamble receiver 203, data receiver 204, data generator 205, Preamble generator 206, and PPDU generator 207.

Note that at least one of separator 202, Preamble receiver 203, data receiver 204, data generator 205, Preamble generator 206, and PPDU generator 207 illustrated in FIG. 12 may be included in the controller illustrated in FIG. 10, and radio transceiver 201 illustrated in FIG. 12 may be included in the receiver illustrated in FIG. 10.

In FIG. 12, radio transceiver 201 receives signals by antennas, for example, performs radio reception processing, such as a down-conversion and an A/D conversion, on a received signal of each antenna, and outputs the signals after the radio reception processing to separator 202. Furthermore, radio transceiver 201 performs radio transmission processing, such as an up-conversion and a D/A conversion, on a signal for each transmission antenna input from PPDU generator 207, and transmits the signals after the radio transmission processing from the antennas.

Separator 202 separates the signal (PPDU) for each reception antenna input from radio transceiver 201, for example, into a Preamble signal and a data signal, outputs the Preamble signal to Preamble receiver 203, and outputs the data signal to data receiver 204 (for example, DFT processor 241).

Preamble receiver 203 demodulates and decodes the Preamble signal, and indicates, to data receiver 204 (for example, DFT processor 241), decoding of the data when the received signal is a signal addressed to terminal 200 or when the received signal is determined to be possibly intended for terminal 200, such as for broadcasting. Preamble receiver 203 outputs, to data receiver 204, downlink scheduling information included in the Preamble and used to demodulate the data.

Data receiver 204 performs reception processing on the downlink signal. Data receiver 204 may include, for example, DFT processor 241, spatial demapper 242, stream demapper 243, demodulator 244, error correction decoder 245, SS mapping holder 246, and TF receiver 247.

Data receiver 204 (for example, DFT processor 241) proceeds to data reception processing when the received signal is determined to be possibly intended for terminal 200.

DFT processor 241 removes a CP and performs a DFT to convert into the frequency domain signal on each of the data signals corresponding to the number of reception antennas input from separator 202. Then, DFT processor 241 demaps (extracts) the signals from AP 100 from a predetermined transmission bandwidth based on the downlink scheduling information (radio resource information or the like) for terminal 200 input from Preamble receiver 203. DFT processor 241 outputs the extracted data signals corresponding to the number of reception antennas of terminal 200 to spatial demapper 242.

Spatial demapper 242 calculates a postcoding matrix with dimensions of the number of SSs × the number of reception antennas based on the downlink scheduling information (for example, the number of SSs) for terminal 200 input from Preamble receiver 203, by using a reference signal for data demodulation included in the data signals. Stream demapper 242 calculates the stream signals corresponding to the number of SSs by multiplying the data signals input from DFT processor 241 by the postcoding matrix, and outputs the stream signals to stream demapper 243.

Stream demapper 243 combines the stream signals corresponding to the number of SSs based on the downlink scheduling information (for example, the number of SSs) for terminal 200 input from Preamble receiver 203, acquires one PSDU data before demodulation, and outputs the one PSDU data to demodulator 244.

Demodulator 244 performs demodulation processing on one PSDU signal before demodulation input from stream demapper 243 (since the downlink transmission is assumed to be single-layer transmission in the present embodiment, the number of PSDUs is one) based on the downlink scheduling information (for example, modulation scheme) for terminal 200 input from Preamble receiver 203, and outputs the one PSDU signal after the demodulation to error correction decoder 245.

Error correction decoder 245 decodes the one PSDU signal input from demodulator 244, for example, based on the downlink scheduling information (for example, coding rate) for terminal 200 input from Preamble receiver 203, and acquires a Trigger frame. Error correction decoder 245 outputs the acquired Trigger frame to TF receiver 247.

SS mapping holder 246 operates in the same manner as SS mapping holder 121 included in AP 100. For example, SS mapping holder 246 holds the same mapping table between the number of SSs and the number of PSDUs as the mapping table held by AP 100, and outputs the mapping table to TF receiver 247.

TF receiver 247 acquires the control information on the uplink multi-layer transmission from terminal-specific information included in the Trigger frame based on the mapping table between the number of SSs and the number of PSDUs from SS mapping holder 246 and the predetermined format known between the transmission and the reception sides. TF receiver 247 outputs the acquired control information on the uplink multi-layer transmission to data generator 205. Note that an example of a method for acquiring the control information on the uplink multi-layer transmission will be described below.

Data generator 205 generates uplink data. Data generator 205 may include, for example, PSDU generator 251, error correction encoder 252, modulator 253, stream mapper 254, spatial mapper 255, and IDFT processor 256.

PSDU generator 251 generates a transmission PSDU based on the control information on the uplink transmission input from TF receiver 247. In addition, PSDU generator 251 generates two or more PSDUs in a case where multi-layer transmission is indicated to terminal 200. PSDU generator 251 outputs the generated one or more PSDUs to error correction encoder 252.

Error correction encoder 252 performs error correction encoding on the one or more PSDUs (for example, two or more PSDUs in a case where multi-layer transmission is indicated) input from PSDU generator 251 based on the control information on the uplink transmission (for example, coding rate) input from TF receiver 247, and outputs the encoded signals to modulator 253.

Modulator 253 performs modulation processing on the one or more PSDU signals after the encoding input from error correction encoder 252, based on the control information (for example, modulation scheme) on the uplink transmission input from TF receiver 247, and outputs the modulated signals to stream mapper 254.

Stream mapper 254 maps the one or more PSDU signals after the modulation to SSs having predetermined SS numbers that are uniquely associated with the number of SSs included in the control information from TF receiver 247, based on the mapping table input from SS mapping holder 246. For example, in a case where one PSDU is mapped to a plurality of SSs, stream mapper 254 divides the PSDU and assigns the divided portion to each SS. Stream mapper 254 outputs, to spatial mapper 255, the stream signals which correspond to the number of SSs and in which the one or more PSDUs after the modulation are mapped.

Spatial mapper 255 multiplies the stream signals corresponding to the number of SSs input from stream mapper 254 by a precoding matrix with dimensions of the number of SSs × the number of transmission antennas (also referred to as the number of transmit chains or the number of antenna ports) (performs a linear operation), and outputs the signals corresponding to the number of transmission antennas to IDFT processor 256. The precoding matrix to be applied by terminal 200 may be calculated by AP 100, and terminal 200 may be notified of the precoding matrix by a Trigger frame or the like.

IDFT processor 256 maps each of the signals corresponding to the number of transmission antennas input from spatial mapper 255 to a predetermined transmission bandwidth based on the control information (for example, transmission bandwidth) on the uplink transmission input from TF receiver 247, performs an IDFT to convert the signals to a time waveform, and adds a CP, thereby generating OFDM signals. IDFT processor 256 outputs, to PPDU generator 207, the calculated OFDM signals corresponding to the number of transmission antennas as data signals. Note that, even in a case where multi-layer transmission is applied, the transmission bandwidth for each SS to which a plurality of PSDUs is assigned may be the same.

Preamble generator 206 generates a Preamble to be added to the data to AP 100, based on the control information on the uplink transmission input from TF receiver 247. The Preamble includes, for example, information used by AP 100 to receive and decode the data. Preamble generator 206 replicates the generated Preamble for the number of transmission antennas, and outputs the signals to PPDU generator 207.

PPDU generator 207 generates one PPDU obtained by time-multiplexing the Preamble signal from Preamble generator 206 and the OFDM signal from IDFT processor 256 for each transmission antenna (multiplexing the Preamble signal and the OFDM signal in this order), and outputs the PPDU to radio transceiver 201.

### [Operation Examples of AP 100 and Terminal 200]

Next, operation examples of AP 100 and terminal 200 described above will be described.

AP 100 applies an independent (or individual) MCS to each of one or more data (PSDUs) and indicates, to terminal 200, the transmission of the data with different SSs (multi-layer transmission using different SSs), by using a control signal (for example, Trigger frame that indicates uplink transmission to terminal 200) including terminal-common information and terminal-specific information. For example, AP 100 includes information indicating multi-layer transmission using different SSs in one piece of terminal-specific information (for example, User Info field).

In the present embodiment, the number of PSDUs transmitted by terminal 200 is configured (or restricted) to be a predetermined number (for example, two) or less. In the present embodiment, the number of SSs and the number of PSDUs are uniquely associated with each other, and the correspondence relationship between the number of SSs and the number of PPDUs is defined in advance. This enables the indication of uplink multi-layer transmission using different SSs using one piece of terminal information (for example, User Info field).

Therefore, AP 100 can indicate, to terminal 200, uplink multi-layer transmission using different SSs with a reduced overhead and an easy implementation.

Hereinafter, an example of the User Info field of the Trigger frame generated by AP 100 (for example, SS mapping holder 121 and terminal-specific information generator 123) will be described.

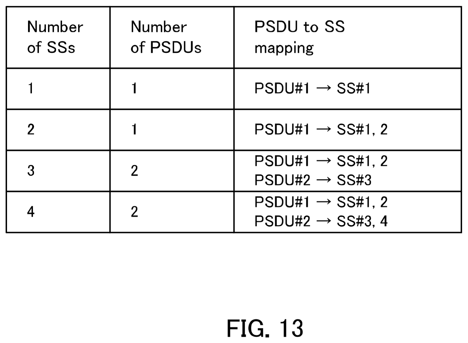

In Configuration Examples 1 to 3 to be described below, a table illustrated in FIG. 13 is used as a mapping table between the number of SSs and the number of PSDUs held by SS mapping holder 121. In FIG. 13, the maximum number of PSDUs is two (upper limit value = 2). As illustrated in FIG. 13, AP 100 indicates the number of PSDUs = 1 (for example, single-layer transmission) when the number of SSs is two or less, and indicates the number of PSDUs = 2 (for example, multi-layer transmission) when the number of SSs is three or more. As described above, for example, when the number of SSs is equal to or less than a threshold value (for example, two), the number of PSDUs (data) associated with the number of SSs is one, and when the number of SSs is greater than the threshold value, the number of PSDUs to be associated with the number of SSs may be set to greater than one.

Hereinafter, multiple PSDUs transmitted in a multi-layer manner using a single PPDU are referred to as "PSDU#1" and "PSDU#2," respectively.

Note that defining the above-described mapping table in the specification (SPEC) enables alignment of interpretation between the transmission and the reception sides. Terminal 200 may be notified of the mapping table to be applied from AP 100 in advance. For example, after terminal 200 is connected to AP 100, if, based on the Capability information indicated from terminal 200, terminal 200 supports multi-layer transmission, AP 100 may notify terminal 200 of a table number (or information for identifying a mapping table) to be applied, selected from among a plurality of mapping tables defined in advance by the SPEC.

### <Configuration Example 1: Basic Trigger>

In Configuration Example 1, an example of extending a Basic Trigger will be described.

AP 100 indicates the number of SSs by using, for example, the two bits of the Number Of Spatial Streams subfield in the User Info field illustrated in FIG. 4, in the same manner as in 11be.

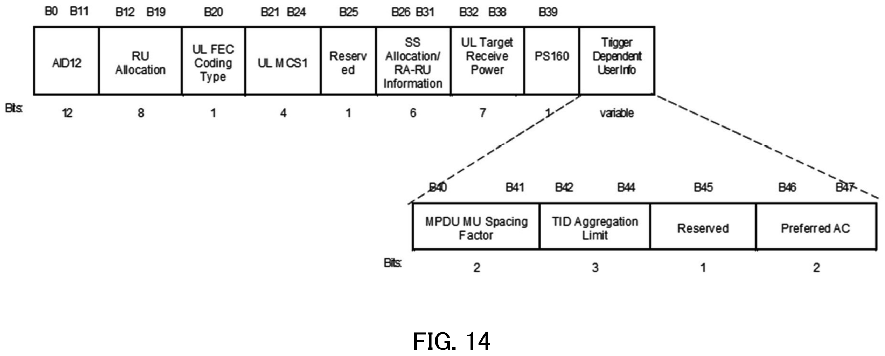

For example, as illustrated in FIG. 13, when the number of SSs to be indicated is equal to or less than two and the number of PSDUs is one (for example, PSDU#1), AP 100 uses the User Info field illustrated in FIG. 14. As illustrated in FIG. 14, the MCS applied to PSDU#1 is indicated by the UL MCS1 subfield in B21 to B24.

Note that, in FIG. 14, the subfield names in B21 to B24 are changed from "UL EHT-MCS" to "UL MCS" with respect to the User Info field of 11be illustrated in FIG. 4, but the same MCS table (EHT-MCS) as in 11be may be applied in UHR.

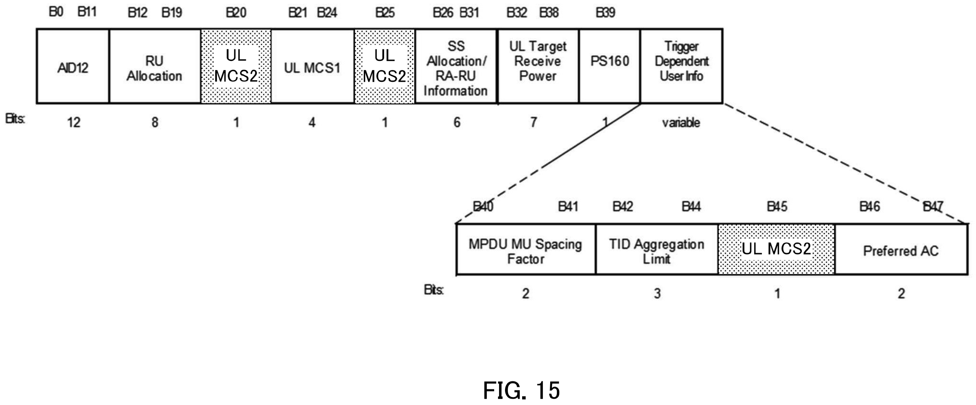

In addition, for example, as illustrated in FIG. 13, when the number of SSs to be indicated is equal to or larger than three and the number of PSDUs is two (for example, PSDU#1 and PSDU#2), AP 100 uses the User Info field illustrated in FIG. 15. As illustrated in FIG. 15, the MCS applied to PSDU#1 is indicated by the UL MCS1 subfield in B21 to B24, similarly to the example of FIG. 14. In addition, as illustrated in FIG. 15, for the MCS applied to PSDU#2, in addition to the reserved bits (B25 and B45) of 11be, B20 that is the UL FEC Coding Type subfield in 11be may be used, for example. In 11be, the UL FEC Coding Type subfield indicates information for controlling which of a Low Density Parity Check (LDPC) or Binary Convolutional Coding (BCC) is used as a method for encoding an uplink signal. In Configuration Example 1, for example, the method of encoding an uplink signal may be fixed to the LDPC when the number of SSs is equal to or greater than three. As a result, B20 that is the UL FEC Coding Type subfield in 11be can be used for the MCS notification for PSDU#2 (for example, UL MCS2).

For example, in a case where the size of the subfield for the MCS notification for PSDU#2 is smaller than the size of the subfield for the MCS notification for PSDU#1, the MCS of PSDU#2 may be indicated by an offset with respect to the MCS of PSDU#1. For example, as illustrated in FIG. 15, when the subfield for MCS notification for PSDU#1 (UL MCS1 subfield, the total number of patterns defined in the MCS table) is four bits in length, and the subfield for MCS notification for PSDU#2 (UL MCS2 subfield) is three bits in length, the MCS of PSDU#2 may be indicated as an offset of the MCS index with respect to the MCS of PSDU#1 (for example, a range of -4 to +3 with a step width of 1). Note that the same MCS may be configured for PSDU#1 and PSDU#2 (for example, offset = 0), or the same MCS need not be configured.

As described above, in Configuration Example 1, different information may be included in one or some of the subfields of the terminal-specific information (User Info field) between a case where the number of PSDUs is greater than one (for example, in multi-layer transmission) and a case where the number of PSDUs is one (for example, in single-layer transmission). Terminal 200 may interpret the information configured in the one or some subfields of the User Info field differently depending on the number of PSDUs (or the number of SSs).

Therefore, in multi-layer transmission, AP 100 can indicate multi-layer transmission by the User Info field having the same size as the existing format (11ax, 11be) by using one or some parameters (for example, coding scheme) as fixed values and using the bits for the MCS notification for another PSDU (for example, PSDU#2). For example, in Configuration Example 1, since a new field or a trigger type need not be added, terminal 200 need not have a function of decoding a User Info field having a new size as compared with the existing format, thereby suppressing an increase in the complexity of the implementation. As a result, the amount of signaling can be reduced, and the implementation can be made easy.

### <Supplement 1 to Configuration Example 1>

The one or some parameters (or the subfields to be interpreted differently depending on the number of PSDUs) to be fixed in multi-layer transmission are not limited to the UL FEC Coding Type subfield. For example, a part of the notification of the following parameters (or subfields) may be limited and may be used for the MCS notification for PSDU#2.

For example, in FIG. 14, a part of the notification of the RU Allocation subfield (eight bits) that indicates the uplink transmission bandwidth may be limited. For example, in multi-layer transmission, some or all of the indications of the small size RU may be made unavailable in order to improve the throughput by the wideband transmission. Alternatively, in multi-layer transmission, the transmission bandwidth may be limited to a transmission bandwidth that is an integer multiple of 20 MHz. This reduces the information amount (number of bits) used for the notification of the uplink transmission bandwidth, in multi-layer transmission, and the bits may be used for the notification of the MCS of PSDU#2 instead.

In addition, in multi-layer transmission, some indexes of the UL MCS1 subfield that indicates the MCS of PSDU#1 in FIG. 14 may be omitted. For example, any of the higher MCS indexes (for example, MCS8 to MCS13) may be indicated, and the lower MCS indexes need not be indicated. Alternatively, even or odd MCS indexes may be indicated. As a result, in multi-layer transmission, the information amount (number of bits) used for the notification of the MCS of PSDU#1 may be reduced, and the information amount may be used for the notification of the MCS of PSDU#2 instead.

In addition, in multi-layer transmission, some or all of the notification of the UL Target Receive Power subfield that indicates the uplink target reception power may be made unavailable in FIG. 14, for example. For example, the OFDMA transmission for scheduling a plurality of terminals within 20 MHz is not assumed to be performed in multi-layer transmission, and thus the transmission power may be fixed to the maximum transmission power (no transmission power control). This reduces, in multi-layer transmission, the information amount (number of bits) used for the notification of the uplink target reception power, and may be used for the notification of the MCS of PSDU#2 instead.

In addition, in multi-layer transmission, a Preferred AC subfield, which indicates the AC (Access Category, a value indicating Voice, Video, Best Effort, Background, or the like) of the uplink data recommended by AP 100, may be set to a fixed value in FIG. 14. For example, in multi-layer transmission, the AC may be fixed to Best Effort (corresponding to no recommendation from the AP). As a result, in multi-layer transmission, the information amount (number of bits) used for the notification of the recommended AC of the uplink data may be reduced, and may be used for the notification of the MCS of PSDU#2 instead.

Note that, in multi-layer transmission, any one of the above-described parameters (for example, the RU Allocation subfield, the UL MCS1 subfield, the UL Target Receive Power subfield, or the Preferred AC subfield) may be fixed and the bits may be used for the MCS notification for PSDU#2, or a plurality of the parameters may be fixed and the bits may be used for the MCS notification of PSDU#2.

### <Supplement 2 to Configuration Example 1>

In Configuration Example 1, since multi-layer transmission can be indicated by the User Info field having the same size as the existing format (11ax, 11be), AP 100 can include the terminal-specific information for terminal 200 that supports multi-layer transmission and for a terminal that does not support multi-layer transmission in one Trigger frame by indicating the terminal-specific information with different User Info fields, respectively.

Here, AP 100 knows in advance whether the terminal to be connected supports multi-layer transmission.

AP 100 uses a User Info Field format (for example, FIGS. 14 and 15) that is switched depending on the number of SSs described above, for terminal 200 that supports multi-layer transmission. On the other hand, AP 100 uses a User Info field format for single-layer transmission (for example, FIG. 14) for the terminal that does not support multi-layer transmission, regardless of the number of SSs.

In addition, for example, terminal 200 that supports multi-layer transmission may first decode the number of SSs from B30 and B31 of the User Info field. When the decoded number of SSs is equal to or less than two, terminal 200 interprets the format as the format for single-layer transmission illustrated in FIG. 14 and acquires the scheduling information on the uplink signal. On the other hand, when the decoded number of SSs is equal to or larger than three, terminal 200 interprets the format as the format for multi-layer transmission illustrated in FIG. 15 and acquires the scheduling information on the uplink signal. Terminal 200 may interpret differently the meaning of one or some subfields (for example, B20, B25, B45) of the User Info field depending on the decoded number of SSs.

Meanwhile, the terminal that does not support multi-layer transmission interprets the format as the format for single-layer transmission illustrated in FIG. 14 regardless of the number of SSs and acquires the scheduling information on the uplink signal.

Note that, as the format for single-layer transmission, the existing 11be format (EHT variant User Info field) may be used.

As described above, because AP 100 can schedule terminals (the terminal that supports multi-layer transmission and the terminal that does not support multi-layer transmission) having different capabilities in one Trigger frame, the signaling can be reduced, and the scheduling efficiency can be improved.

### <Variation Example 1 of Configuration Example 1>

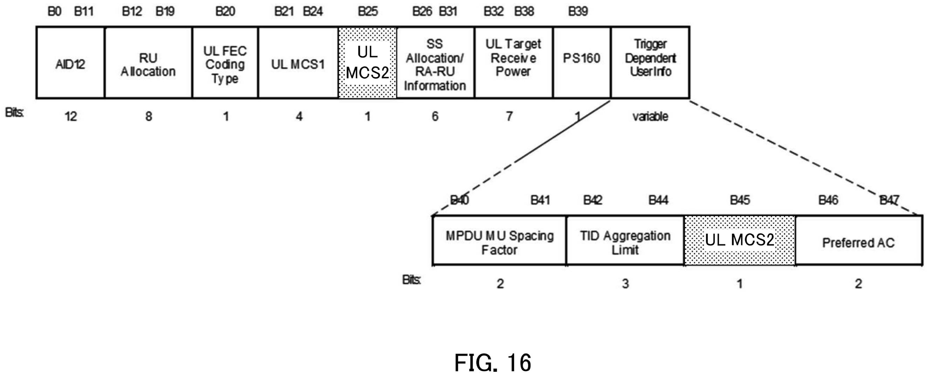

For the MCS notification of another PSDU (PSDU#2) in Configuration Example 1 obtained by improving the Basic Trigger, only reserved bits of the existing format may be used. For example, as illustrated in FIG. 16, the two bits of the reserved bits of B25 and B45 may be used for the MCS notification of PSDU#2. Alternatively, any one bit of B25 and B45 may be used for the MCS notification of PSDU#2.

In addition, for example, the offset for the MCS of PSDU#1 may be set to a fixed value without providing a subfield for the MCS notification of PSDU#2. For example, in a case where, in hierarchical video coding, PSDU#1 is generated in a base layer and PSDU#2 is generated in an enhancement layer to perform a multi-layer transmission, a fixed offset may be predetermined based on the difference in the required quality between the two layers.

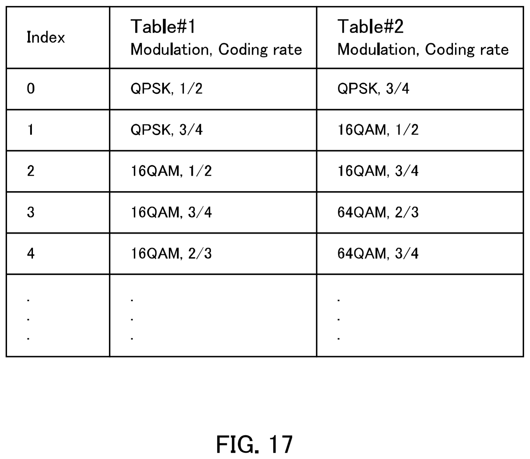

In addition, in the MCS notification method for another PSDU (PSDU#2), an MCS table number to be applied may be indicated, as illustrated in FIG. 17, instead of the offset with respect to the MCS of PSDU#1. A table in which a plurality of MCS tables is associated with one MCS index may be preconfigured, and the MCS table number (Table#1 or Table#2 in FIG. 17) may be indicated by any of the reserved bits (for example, by using B25 in FIG. 16). For example, the index illustrated in FIG. 17 may be indicated by the UL MCS1 subfield of the User Info field, and the MCSs for PSDU#1 and PSDU#2 may be configured.

### <Variation Example 2 of Configuration Example 1>

Information (for example, referred to as "Multi-Layer flag") for indicating single-layer transmission regardless of the number of SSs may be added to terminal 200 that supports multi-layer transmission.

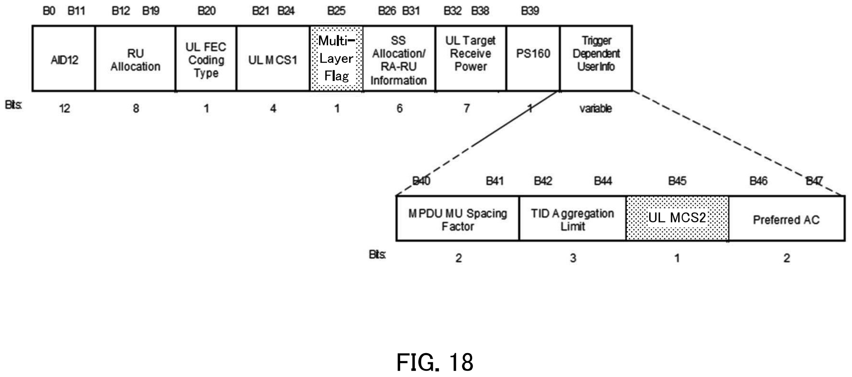

For example, as illustrated in FIG. 18, a Multi-Layer flag may be configured in B25. For example, in a case where the Multi-Layer flag indicates zero, the format illustrated in FIG. 14 for single-layer transmission may be applied regardless of the number of SSs. In addition, in a case where the Multi-Layer flag indicates one, as illustrated in FIG. 18, the format for multi-layer transmission including the MCS notification of PDSU#2 may be applied.

Accordingly, AP 100 can indicate single-layer transmission to terminal 200 that supports multi-layer transmission even when the number of SSs is equal to or greater than a predetermined number, depending on the communication situation.

### <Configuration Example 2: New Trigger Type>

In Configuration Example 2, an example will be described in which a new Trigger type that indicates multi-layer transmission is added to the Trigger type included in the terminal-common information (for example, Common Info field) generated by terminal-common information generator 122.

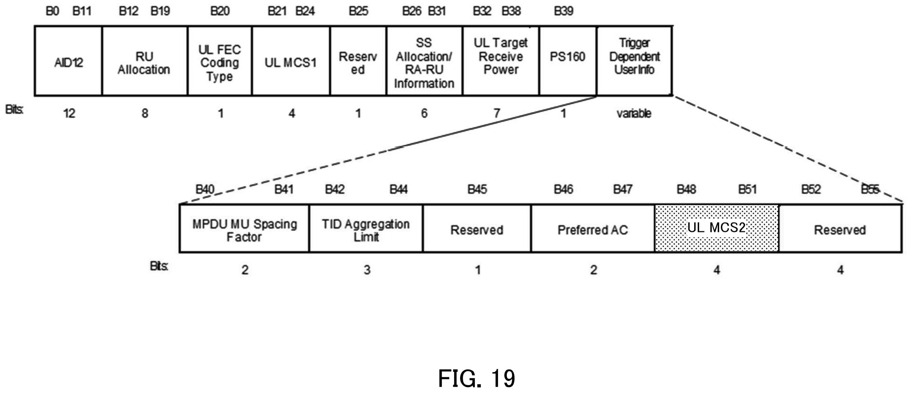

AP 100 uses a User Info field illustrated in FIG. 19, for example, when the Trigger type indicating multi-layer transmission is configured (Multi-layer trigger).

As illustrated in FIG. 19, in Multi-layer trigger, AP 100 indicates the MCS of another PSDU (PSDU#2) (for example, UL MCS2 subfield) by using (or extending) the Trigger Dependent User Info subfield. In the example of FIG. 19, the MCS of PSDU#1 is indicated by using the UL MCS1 subfield in B21 to B24, and the MCS of PSDU#2 is indicated by using the UL MCS2 subfield in B48 to B51.

Terminal 200 that supports multi-layer transmission uses (or assumes) the User Info field format illustrated in FIG. 19, for example, in a case where the Trigger type subfield of the terminal-common information indicates Multi-layer trigger.

Terminal 200 that supports multi-layer transmission may identify the number of PSDUs based on the number of SSs indicated by the User Info field, by using, for example, the mapping table between the number of SSs and the number of PSDUs. For example, when the number of SSs is equal to or larger than three, terminal 200 determines that the number of PSDUs is two, acquires the MCS of PDSU#1 from the UL MCS1 subfield in B21 to B24, and acquires the MCS of PDSU#2 from the UL MCS2 subfield in B48 to B51. In addition, when the number of SSs is equal to or smaller than two, terminal 200 determines that the number of PSDUs is one (single-layer transmission), acquires the MCS of PDSU#1 from the UL MCS1 subfield in B21 to B24, and need not use the UL MCS2 subfield in B48 to B51.

In Configuration Example 2, the mapping table between the number of SSs and the number of PSDUs need not be used. For example, AP 100 may indicate either single-layer transmission or multi-layer transmission (for example, the number of PSDUs is one or two) by including the information indicating single-layer transmission or multi-layer transmission in some of the indexes of the UL MCS2 subfield.

On the other hand, when the terminal that does not support multi-layer transmission determines that the trigger type is Multi-layer trigger from the trigger type subfield of the terminal-common information, the terminal determines that the trigger is not supported by the terminal and stops the subsequent processing of receiving the Trigger frame.

As described above, in Configuration Example 2, the type that indicates multi-layer transmission using different SSs (for example, Multi-layer trigger) is included in the Trigger type of the Trigger frame, and when the Trigger type is Multi-layer trigger, the information on the MCS for at least one PSDU from a predetermined number or fewer of PSDUs is included in the Trigger Dependent User Info subfield. This enables the indication of multi-layer transmission while including all the information that can be indicated by the existing Basic Trigger and securing the MCS notification bit for PSDU#2. Therefore, in Configuration Example 2, the flexibility of the uplink transmission indication to terminal 200 can be improved as compared with Configuration Example 1, and the throughput is expected to be improved.

### <Configuration Example 3: New PHY Version>

In Configuration Example 3, an example will be described in which a new PHY version that indicates multi-layer transmission is added to the PHY Version Identifier subfield of the Special User Info field generated by terminal-common information generator 122.

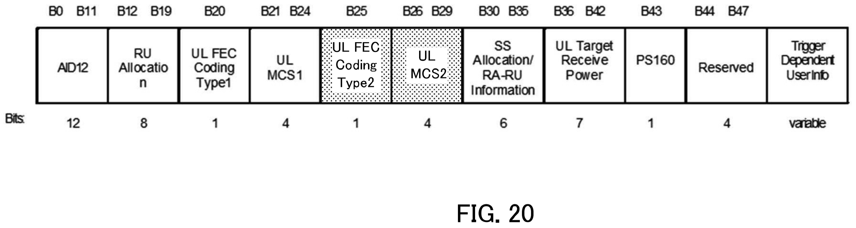

When AP 100 configures a PHY version that indicates multi-layer transmission (for example, when the PHY version is configured as "UHR"), AP 100 uses the UHR variant User Info field illustrated in FIG. 20, for example. It is assumed that terminal 200 supporting the PHY version that indicates multi-layer transmission supports multi-layer transmission.

As illustrated in FIG. 20, the UHR variant User Info field may be configured with a subfield (for example, UL MCS2 subfield) for indicating the MCS of another PSDU (PSDU#2) and a subfield (for example, UL FEC Coding Type2 subfield) for indicating the UL FEC Coding Type of the other PSDU (PSDU#2).

Terminal 200 (for example, UHR terminal) that supports the UHR variant User Info field uses the User Info field format illustrated in FIG. 20 when the PHY version specified by the PHY Version Identifier subfield is UHR.

Furthermore, terminal 200 that supports multi-layer transmission may specify the number of PSDUs based on the number of SSs indicated by the User Info field, by using, for example, the mapping table between the number of SSs and the number of PSDUs. For example, when the number of SSs is equal to or larger than three, terminal 200 determines that the number of PSDUs is two, acquires the MCS of PDSU#1 from the UL MCS1 subfield in B21 to B24, acquires the method of encoding PDSU#2 from the UL FEC Coding Type2 subfield in B25, and acquires the MCS of PDSU#2 from the UL MCS2 subfield in B26 to B29. When the number of SSs is equal to or smaller than two, terminal 200 determines that the number of PSDUs is one (single-layer transmission), and need not use the UL FEC Coding Type2 subfield in B25 and the UL MCS2 subfield in B26 to B29.

Note that, in Configuration Example 3, the mapping table between the number of SSs and the number of PSDUs need not be used. For example, AP 100 may indicate which of a single-layer transmission or a multi-layer transmission is to be performed (for example, whether the PSDU number is one or two) by including the information indicating single-layer transmission or multi-layer transmission in some of the indexes of the UL MCS2 subfield.

On the other hand, the terminal that does not support the UHR variant User Info field determines that the PHY version is not supported by the terminal and stops the subsequent processing of receiving the Trigger frame, when the PHY version specified by the PHY Version Identifier subfield of the terminal-common information is UHR.

In Configuration Example 3, the PHY version (for example, UHR) corresponding to multi-layer transmission using different SSs is included in the PHY version of the Trigger frame, and when the PHY version is the PHY version corresponding to multi-layer transmission using different SSs, the information on the MCS for a predetermined number or fewer of PSDUs is included in the User Info field. This enables the indication of multi-layer transmission while including all the information that can be indicated by the existing Basic Trigger and securing the MCS notification bit for PSDU#2. Therefore, in Configuration Example 3, the flexibility of the uplink transmission indication to terminal 200 can be improved as compared with Configuration Example 1, and the throughput is expected to be improved.

Note that the configuration of the UHR variant User Info field is not limited to the example illustrated in FIG. 20, and another configuration may be used. For example, in the configuration of the UHR variant User Info field illustrated in FIG. 20, the UL FEC Coding Type2 subfield need not be included. In this case, the coding scheme for another PSDU (for example, PSDU#2) may be fixed (for example, LDPC). In addition, in the configuration of the UHR variant User Info field illustrated in FIG. 20, the UL MCS2 subfield may indicate an index indicating the MCS of another PSDU (for example, PSDU#2) or may indicate an offset value with respect to the UL MCS1.

### Configuration Examples 1 to 3 have been described above.

As described above, in the present embodiment, AP 100 includes control information indicating that a predetermined number (for example, two) or fewer of PSDUs data to which different MCSs are applied are transmitted using different SSs (multi-layer transmission) in one User Info field in a Trigger frame including a Common Info field and a User Info field, and transmits the Trigger frame. Furthermore, terminal 200 receives the Trigger frame which includes the Common Info field and the User Infor field and in which control information indicating that a predetermined number (for example, two) or fewer of PSDUs data to which different MCSs are applied are transmitted using different SSs (multi-layer transmission) is included in one User Info field. Terminal 200 controls transmission of PSDUs based on the Trigger frame.

As a result, as in the existing format (for example, 11ax and 11be), the indication of multi-layer transmission can be performed by using one User Info field, and the increase in the amount of signaling can be suppressed.

In addition, since terminal 200 can complete the process of receiving control information on multi-layer transmission by using one User Info field and can start the next process (for example, uplink signal transmission), the complexity of implementation can be suppressed.

Therefore, according to the present embodiment, the efficiency of the transmission control in radio communication (for example, multi-layer transmission control) can be improved.

### (Variation 1 of Embodiment 1)

A plurality of mapping tables that uniquely associate the number of SSs and the number of PSDUs held by AP 100 (for example, SS mapping holder 121) and terminal 200 (for example, SS mapping holder 246) may be defined. The association between the number of SSs and the number of PSDUs may be different between a plurality of mapping tables.

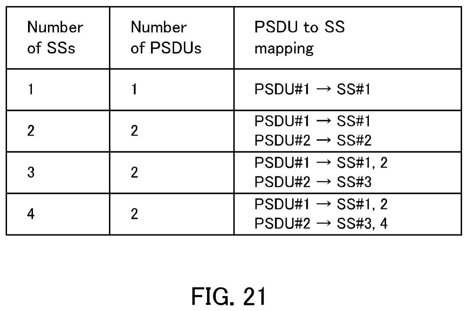

For example, in addition to the mapping table illustrated in FIG. 13, the mapping table illustrated in FIG. 21 may be defined. In the mapping table illustrated in FIG. 13, multi-layer transmission is applied when the number of SSs is equal to or larger than three. On the other hand, in the mapping table illustrated in FIG. 21, multi-layer transmission is applied when the number of SSs is equal to or larger than two.

For example, in a case where the uplink signal from one terminal is received by a plurality of APs (for example, in multi-AP reception), the path loss may vary depending the AP that receives the uplink signal, and the reception quality may be significantly different. Therefore, by configuring the MCS suitable for each AP and transmitting the signal to each AP by spatial multiplexing, the throughput performance can be improved. Therefore, in a case where the uplink signal from one terminal is received by a plurality of APs, multi-layer transmission capable of configuring different MCSs for a plurality of PSDUs may be actively applied by using the mapping table illustrated in FIG. 21.

In addition, for example, in a case where AP 100 uses a successive interference canceller (SIC) receiver, the throughput performance in multi-layer transmission can be improved by performing the interference cancellation process at the PSDU level. Therefore, in a case where AP 100 uses the SIC receiver, multi-layer transmission may be actively applied by using the mapping table illustrated in FIG. 21.

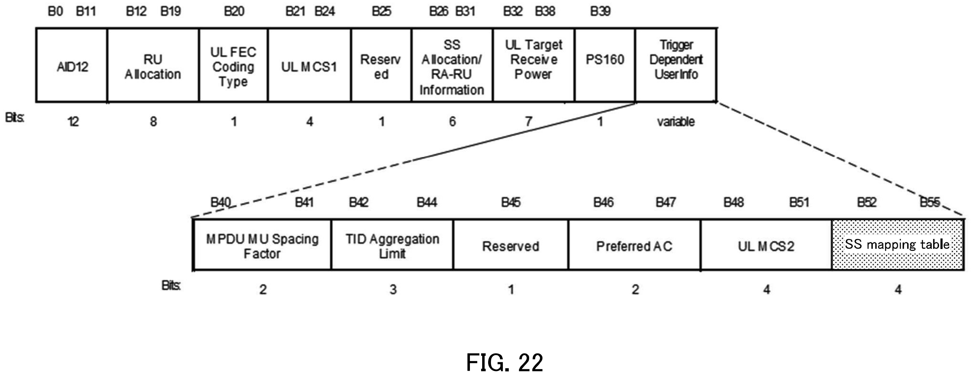

In a case where a plurality of mapping tables is defined, the Trigger frame may include information for identifying any one of the mapping tables (for example, a mapping table number to be applied) and may be indicated from AP 100 to terminal 200. For example, a mapping table number to be applied may be indicated by using the reserved subfield (at least one of B37 to B39) of the Special User Info field illustrated in FIG. 6. In addition, for example, in a case where Multi-layer trigger is defined as described in Configuration Example 2, a subfield for indicating the mapping table number (for example, SS mapping table subfield) may be configured in the Trigger Dependent User Info subfield of the User Info field as illustrated in FIG. 22, and the mapping table number to be applied may be indicated.

In this way, by defining a plurality of mapping tables that uniquely associate the number of SSs and the number of PSDUs and dynamically switching the mapping table to be applied by the Trigger frame, it is possible to indicate multi-layer transmission suitable for the communication condition, and the throughput performance can be improved.

### (Variation 2 of Embodiment 1)

The mapping table that uniquely associates the number of SSs and the number of PSDUs held by AP 100 (for example, SS mapping holder 121) and terminal 200 (for example, SS mapping holder 246) may include a mapping that uniquely associates a PSDU number and an SS number.

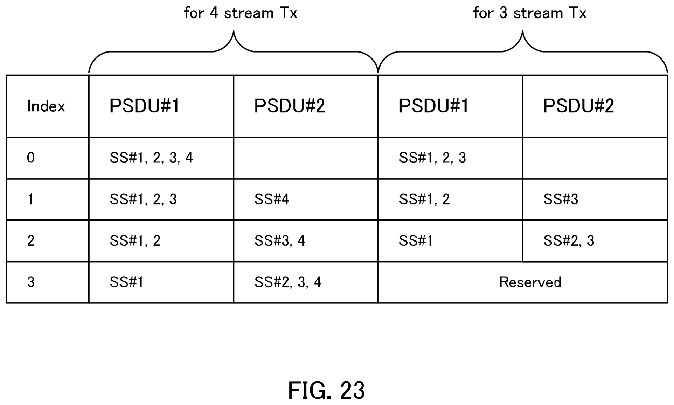

For example, as illustrated in FIG. 23, in the mapping between the number of SSs and the number of PSDUs, a plurality of patterns of the mapping between a PSDU number and an SS number may be defined. AP 100 may, for example, include information for identifying any one of the mapping tables (for example, a mapping table number to be applied) in the Trigger frame, and may indicate the Trigger frame to terminal 200.

In the example of FIG. 23, in a case where the number of SSs is four (in the case of 4-stream transmission), different correspondence relationships for the mapping between the SS number and the PSDU number may be defined in multi-layer transmission as follows. For example, when Index = 0, one PSDU (PSDU#1) is assigned to all the SS numbers (single-layer transmission). When Index=1, PSDU#1 is assigned to SS#1, 2, and 3, and PSDU#2 is assigned to SS#4 (multi-layer transmission). When Index = 2, PSDU#1 is assigned to SS#1 and 2, and PSDU#2 is assigned to SS#3 and 4 (multi-layer transmission). When Index = 3, PSDU#1 is assigned to SS#1, and PSDU#2 is assigned to SS#2, 3, and 4 (multi-layer transmission).

Similarly, in the example of FIG. 23, in a case where the number of SSs is three (in the case of 3-stream transmission), different correspondence relationships for the mapping between the SS number and the PSDU number may be defined in multi-layer transmission as follows. For example, when Index = 0, one PSDU (PSDU#1) is assigned to all the SS numbers (single-layer transmission). When Index = 1, PSDU#1 is assigned to SS#1 and 2, and PSDU#2 is assigned to SS#3 (multi-layer transmission). When Index = 2, PSDU#1 is assigned to SS#1, and PSDU#2 is assigned to SS#2 and 3 (multi-layer transmission).

When terminal 200 transmits one PSDU by mapping the one PSDU to a plurality of SSs in multi-layer transmission, the MCS applied to each PSDU is configured based on the average quality (for example, average SINR) of the SSs to which the PSDU is assigned. For example, the MCS may be determined depending on the lowest SINR among those of the plurality of SSs to which the PSDU is assigned.

By defining a plurality of patterns of the mapping table between the PSDU number and the SS number and dynamically switching the mapping table to be applied by the Trigger frame, for example, it is possible to map the SSs having the similar SINR to the same PSDU, thereby improving throughput performance.

Note that, for the notification of the mapping table, the reserved bit of the Special User Info field may be used as in Variation 1, the Trigger Dependent User Info subfield of the User Info field may be used, or another field may be used.

The mapping table in a case where the maximum number of SSs is four has been described in Embodiment 1, but the maximum number of SSs is not limited to four, and may be another number.

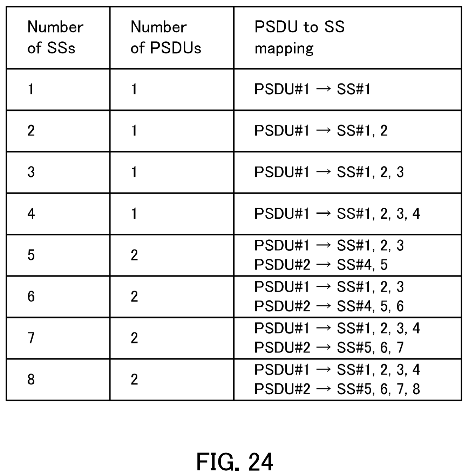

For example, in a case where the maximum number of SSs is eight, the mapping table between the number of SSs and the number of PSDUs illustrated in FIG. 24 may be applied. In the mapping table illustrated in FIG. 24, the number of PSDUs is set to one (single-layer transmission) when the number of SSs is equal to or smaller than four, and the number of PSDUs is set to two (multi-layer transmission) when the number of SSs is equal to or larger than five.

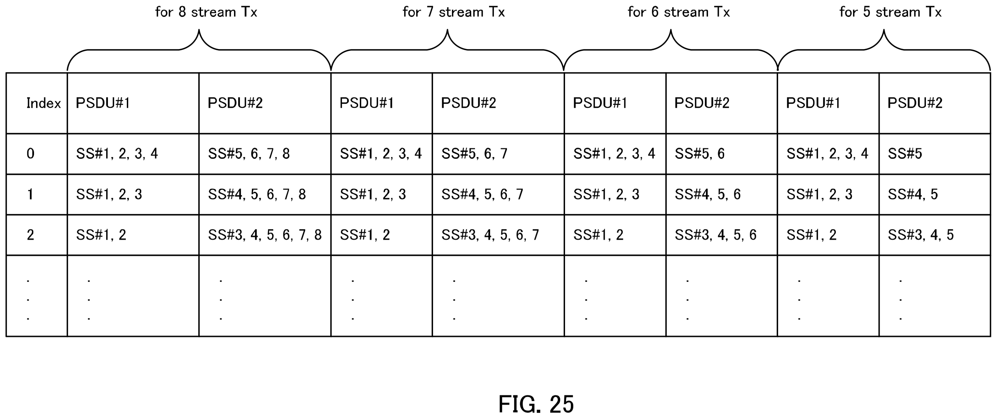

In addition, for example, in a case where the maximum number of SSs is eight, the mapping table between the PSDU number and the SS number illustrated in FIG. 25 may be applied. For example, in the example of FIG. 24, the number of PSDUs is set to two when the number of SSs is equal to or larger than five, and a multi-layer transmission is performed. At this time, as illustrated in FIG. 25, a plurality of patterns of the SS numbers in which PSDU#1 and PSDU#2 are respectively assigned may be defined.

### (Variation 3 of Embodiment 1)

The transmission power control may be performed in multi-layer transmission.

For example, AP 100 may notify terminal 200 of whether to configure the transmission power ratio per PSDU to the same level or to configure the transmission power ratio per SS to the same level in multi-layer transmission.

For example, the number of SSs to which each PSDU is assigned may be different between the PSDUs. For example, in the mapping table illustrated in FIG. 23, in the case where the number of SSs is four, and Index = 1, PSDU#1 is assigned to three SSs of SS#1, 2, and 3, and PSDU#2 is assigned to one SS of SS#4.

For example, the same transmission power may be configured for each PSDU (the transmission power ratio per PSDU may be configured to the same level). In this case, the transmission power of PSDU#1 is approximately the same as the transmission power of PSDU#2. In addition, in this case, the transmission power of SS#4 is three times the transmission power of each of SS#1, 2, and 3. For example, in a case where PSDU#2 is data having higher priority than PSDU#1 (for example, traffic in which low delay or high reliability is requested), the transmission power per PSDU is configured to the same value, for example, by configuring the transmission power of SS#4 to three times the transmission power of each of SS#1, 2, and 3, thereby improving the reception quality of PSDU#2.

Alternatively, for example, the same transmission power may be configured for each SS (transmission power ratio per SS may be configured to the same level). In this case, the transmission power of PSDU#1 is three times the transmission power of PSDU#2. For example, in a case where PSDU#1 is data having higher priority than PSDU#2 (for example, traffic in which low delay or high reliability is requested), the transmission power per SS is configured to the same value, and the transmission power of PSDU#1 is configured to three times the transmission power of PSDU#2, thereby improving the reception quality of PSDU#1.

Note that the transmission power control described above may be performed, for example, by spatial mapper 255 of terminal 200 illustrated in FIG. 12. For example, spatial mapper 255 can perform the above-described transmission power control by multiplying the stream signals corresponding to the number of SSs from stream mapper 254 by coefficients that provide a predetermined transmission power ratio for each SS. Spatial mapper 255 multiplies, for example, the stream signals after the transmission power control by a precoding matrix with dimensions of the number of SSs × the number of transmission antennas, and outputs the signals corresponding to the number of transmission antennas to IDFT processor 256.

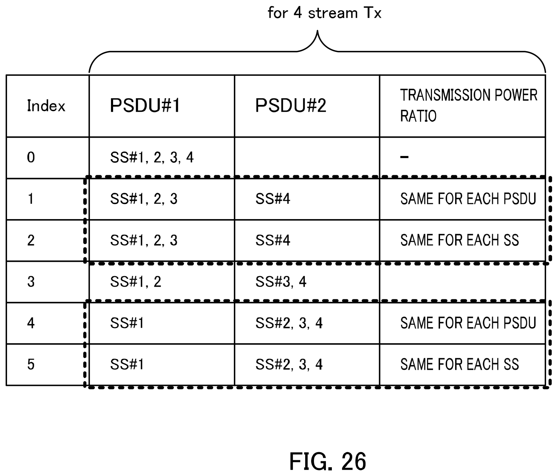

The transmission power information may be indicated by including the transmission power information in a mapping table as illustrated in FIG. 26, for example. In the example of FIG. 26, the number of SSs to which each PSDU is assigned is different between when Index = 1 or 2 and when Index = 4 or 5. In such a condition (or pattern), a pattern (for example, Index = 1 and 4) in which the transmission power ratio per PSDU is configured to the same value and a pattern (for example, Index = 2 and 5) in which the transmission power ratio per SS is configured to the same value may be included. AP 100 may notify terminal 200 of the pattern to be applied using the Trigger frame, including the transmission power control, for example.

This allows indication of appropriate transmission power control even when the number of SSs to which each PSDU is assigned is different, thereby improving throughput performance.

### (Embodiment 2)

In the present embodiment, an operation example of multi-layer transmission on the downlink (or multi-layer reception on the downlink) will be described.

For example, a control example from the AP to the terminal for the downlink multi-layer reception will be described. The AP controls downlink multi-layer reception using different spatial streams by a method obtained by improving a Preamble used in 11ax and 11be and indicating the reception of a downlink signal to the terminal, for example.

Note that, in the present embodiment, the description of the transmission of an uplink signal will be omitted. The existing single-layer transmission may be applied to the transmission of an uplink signal, or multi-layer transmission described in Embodiment 1 may be applied.

### [Configuration of Radio Communication System]

The radio communication system according to the present embodiment may include, for example, AP 300 and terminal 400.

AP 300 transmits, to terminal 400, a control signal (for example, Preamble) that includes terminal-common information and terminal-specific information, and indicates downlink multi-layer reception to terminal 400. The Preamble may include, in one terminal information (User field), control information indicating that data (PSDU) which are less than or equal to a predetermined number (for example, two or less) and to which MCSs are applied, are received by using different spatial streams (SSs).

Terminal 400 receives the Preamble, for example, and receives the downlink multi-layer signal in which the indicated MCSs are applied to a predetermined number of PSDUs and the PSDUs after encoding and modulation are assigned to different spatial streams (SSs), based on the indication by the received Preamble.

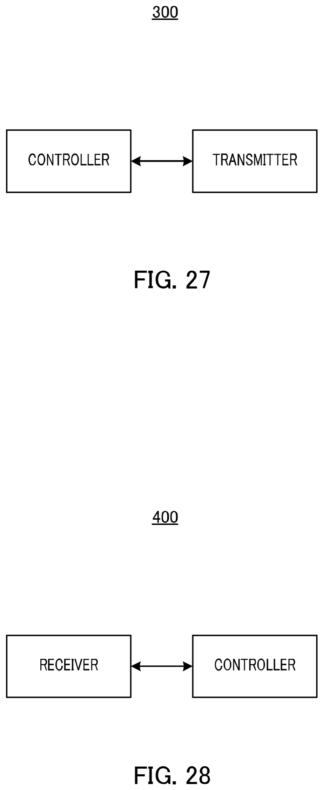

FIG. 27 is a block diagram illustrating a part of a configuration example of AP 300 according to the embodiment of the present disclosure. In AP 300 illustrated in FIG. 27, a controller (for example, corresponding to control circuitry) includes control information in one piece of terminal-specific information (for example, User field) in a control signal (for example, Preamble) including terminal-common information common to a plurality of terminals and terminal-specific information specific to each of the terminals. The control information indicates that data (for example, PSDU) which are less than or equal to a predetermined number and to which different modulation and coding schemes (MCSs) are applied, are received by using different spatial streams (SSs) (for example, multi-layer reception). A transmitter (corresponding to, for example, transmission circuitry) transmits the control signal.

FIG. 28 is a block diagram illustrating a part of a configuration example of terminal 400 according to the embodiment of the present disclosure. In terminal 400 illustrated in FIG. 28, a receiver (for example, corresponding to reception circuitry) receives a control signal (for example, Preamble) including terminal-common information common to a plurality of terminals and terminal-specific information specific to each of the terminals. In the control signal, control information indicating that data which are less than or equal to a predetermined number and to which different modulation and coding schemes (MCSs) are applied, are received by using different spatial streams (for example, multi-layer reception) is included in one piece of terminal-specific information (for example, User field). A controller (for example, corresponding to control circuitry) controls the reception of the data based on the control signal.

### [Configuration Example of AP 300]

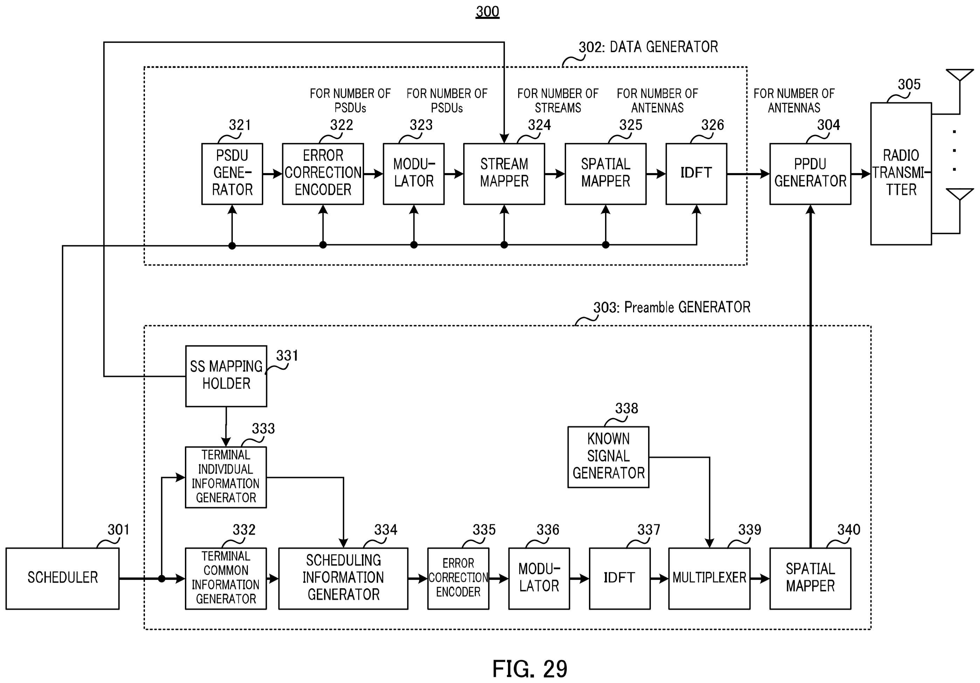

FIG. 29 is a block diagram illustrating a configuration example of AP 300.

AP 300 illustrated in FIG. 29 may include, for example, scheduler 301, data generator 302, Preamble generator 303, PPDU generator 304, and radio transmitter 305.

Note that at least one of scheduler 301, data generator 302, Preamble generator 303, and PPDU generator 304 illustrated in FIG. 29 may be included in the controller illustrated in FIG. 27, and radio transmitter 305 illustrated in FIG. 29 may be included in the transmitter illustrated in FIG. 27.

In FIG. 29, scheduler 301 may schedule terminal 400, for example. For example, scheduler 301 determines scheduling information on a downlink signal for one or more terminals including terminal 400 based on reception quality information, a transmit buffer state, terminal capability information, or the like fed back from terminal 400.

The scheduling information may include, for example, a radio resource (for example, including at least one of a transmission bandwidth and a signal length) to be assigned to terminal 400 and information on the MCS and the number of spatial streams (SSs) to be applied to the downlink signal. For example, the configurations of the radio resource, the number of SSs, and the MCS for the downlink multi-layer by scheduler 301 may be the same as the configurations of the radio resource, the number of SSs, and the MCS for the uplink multi-layer by scheduler 101 of AP 100 according to Embodiment 1.

Scheduler 301 outputs the determined scheduling information for terminal 400 to data generator 302 and Preamble generator 303.

Data generator 302 generates downlink data (for example, downlink multi-layer transmission data). For example, data generator 302 may perform the same data generation processing as the data generation processing in the uplink multi-layer transmission of terminal 200 according to Embodiment 1.

Data generator 302 may include, for example, PSDU generator 321, error correction encoder 322, modulator 323, stream mapper 324, spatial mapper 325, and IDFT processor 326.

PSDU generator 321 generates a transmission PSDU based on the scheduling information on the downlink transmission input from scheduler 301. In addition, PSDU generator 321 generates two or more PSDUs in a case where multi-layer reception is indicated to terminal 400. PSDU generator 321 outputs the generated one or more PSDUs to error correction encoder 322.

Error correction encoder 322 performs error correction encoding on the one or more PSDUs (for example, two or more PSDUs in a case where multi-layer reception is indicated) input from PSDU generator 321, based on the scheduling information on the downlink transmission (for example, coding rate) input from scheduler 301, and outputs the encoded signals to modulator 323.

Modulator 323 performs modulation processing on the one or more PSDU signals after the encoding input from error correction encoder 322, based on the scheduling information (for example, modulation scheme) on the downlink transmission input from scheduler 301, and outputs the modulated signals to stream mapper 324.

Stream mapper 324 maps the one or more PSDU signals after the modulation to SSs having predetermined SS numbers that are uniquely associated with the number of SSs included in the scheduling information on the downlink transmission input from scheduler 301, based on the mapping table from Preamble generator 303 (for example, SS mapping holder 331). For example, in a case where one PSDU is mapped to a plurality of SSs, stream mapper 324 divides the PSDU and assigns the divided portion to each SS. Stream mapper 324 outputs, to spatial mapper 325, the stream signals which correspond to the number of SSs and to which the one or more PSDUs after the modulation are mapped.

Spatial mapper 325 multiplies the stream signals corresponding to the number of SSs from stream mapper 324 by a precoding matrix with dimensions of the number of SSs × the number of transmission antennas (performs a linear operation), and outputs the signals corresponding to the number of transmission antennas to IDFT processor 326.

IDFT processor 326 maps each of the signals corresponding to the number of transmission antennas from spatial mapper 325 to a predetermined transmission bandwidth, based on the scheduling information (for example, a transmission bandwidth) on the downlink transmission input from scheduler 301, performs an IDFT to convert the signals to a time waveform, and adds a CP, thereby generating OFDM signals. IDFT processor 326 outputs, to PPDU generator 304, the calculated OFDM signals corresponding to the number of transmission antennas as data signals. Note that, even in a case where multi-layer transmission (or multi-layer reception) is applied, the transmission bandwidth for each SS to which a plurality of PSDUs is assigned may be the same.

Preamble generator 303 generates a control signal for indicating the downlink multi-layer reception to terminal 400. The processing of generating the control signal by Preamble generator 303 may be the same as the processing of generating the Trigger frame that indicates uplink multi-layer transmission by AP 100 according to Embodiment 1, for example.

Preamble generator 303 may include, for example, SS mapping holder 331, terminal-common information generator 332, terminal-specific information generator 333, scheduling information generator 334, error correction encoder 335, modulator 336, IDFT processor 337, known signal generator 338, multiplexer 339, and spatial mapper 340.

SS mapping holder 331 holds information (for example, information in a mapping table format) that uniquely associates the number of SSs and the number of PSDUs defined in advance. For example, the mapping table held by SS mapping holder 331 may be the same as the mapping table held by AP 100 according to Embodiment 1. SS mapping holder 331 outputs the held information on the mapping table between the number of SSs and the number of PSDUs, to terminal-specific information generator 333 and stream mapper 324.

Terminal-common information generator 332 generates control information included in a Common field (for example, FIG. 7) common to a plurality of terminals including terminal 400 based on allocation information on the radio resource input from scheduler 301.

For example, a new PPDU type indicating downlink multi-layer transmission (or downlink multi-layer reception) may be defined in the PPDU type of the U-SIG field (for example, U-SIG-2 subfield in the U-SIG (Universal SIGNAL) field). The PPDU type is a field that indicates the signal type of the PPDU (SU transmission, non-OFDMA DL MU-MIMO transmission, or the like). Note that AP 300 may indicate the PPDU type as non-OFDMA DL MU-MIMO transmission and indicate downlink multi-layer transmission in the User field, for example.

Terminal-common information generator 332 outputs the generated information on the Common field to scheduling information generator 334.

Terminal-specific information generator 333 generates control information included in a User field (for example, FIG. 7) specific to terminal 400. Terminal-specific information generator 333 may generate information on the User field specific to terminal 400 based on the scheduling information from scheduler 301, the mapping table between the number of SSs and the number of PSDUs from SS mapping holder 331, and the predetermined format illustrated in FIG. 8, and may generate information on a User Specific field including the User field for each of a plurality of terminals 400. Terminal-specific information generator 333 outputs the information on the User Specific field to scheduling information generator 334. An operation example of terminal-specific information generator 333 will be described below.

Scheduling information generator 334 may generate scheduling information (for example, in the case of EHT, corresponding to the EHT-SIG field illustrated in FIG. 7) including the Common field input from terminal-common information generator 332 and the User Specific field (for example, at least one User field) input from terminal-specific information generator 333, based on the format illustrated in FIG. 7, for example. Scheduling information generator 334 outputs the generated scheduling information to error correction encoder 335, for example.

Error correction encoder 335 performs error correction encoding on the control signal including the scheduling information input from scheduling information generator 334, based on a predetermined coding rate, and outputs the encoded signal to modulator 336.

Modulator 336 performs, for example, modulation processing on the control signal after the encoding input from error correction encoder 335, based on a predetermined modulation scheme, and outputs the signal after the modulation to IDFT processor 337.

IDFT processor 337 maps each of the control signals from modulator 336 to a predetermined transmission bandwidth, performs an IDFT to convert the control signals to a time waveform, and adds a CP, thereby generating OFDM signals. IDFT processor 337 outputs the calculated OFDM signals corresponding to the number of transmission antennas to multiplexer 339.

Known signal generator 338 generates signals including known signals excluding the EHT-SIG field (for example, L-STF (non-HT STF), L-LTF (non-HT LTF), L-SIG (non-HT SIGNAL), RL-SIG (repeated non-HT SIGNAL), and U-SIG) in the Preamble illustrated in FIG. 7, and outputs the signals to multiplexer 339.

Multiplexer 339 time-multiplexes the signals including the known signals from known signal generator 338 and the signal including the scheduling information from IDFT processor 337 to generate the Preamble signal and outputs the Preamble signal to spatial mapper 340.

Spatial mapper 340 replicates the Preamble signal from multiplexer 339 and outputs the Preamble signals for the number of transmission antennas to PPDU generator 304.

PPDU generator 304 generates one PPDU obtained by time-multiplexing the Preamble signal from Preamble generator 303 (spatial mapper 340) and the OFDM signal from data generator 302 (IDFT processor 326) for each transmission antenna (multiplexing the Preamble signal and the OFDM signal in this order), and outputs the PPDU signal to radio transmitter 305.

Radio transmitter 305 performs radio transmission processing, such as an up-conversion and a D/A conversion, on the PPDU signal input from PPDU generator 304 for each transmission antenna, and transmits the signals after the radio transmission processing from the antennas.

### [Configuration Example of Terminal 400]

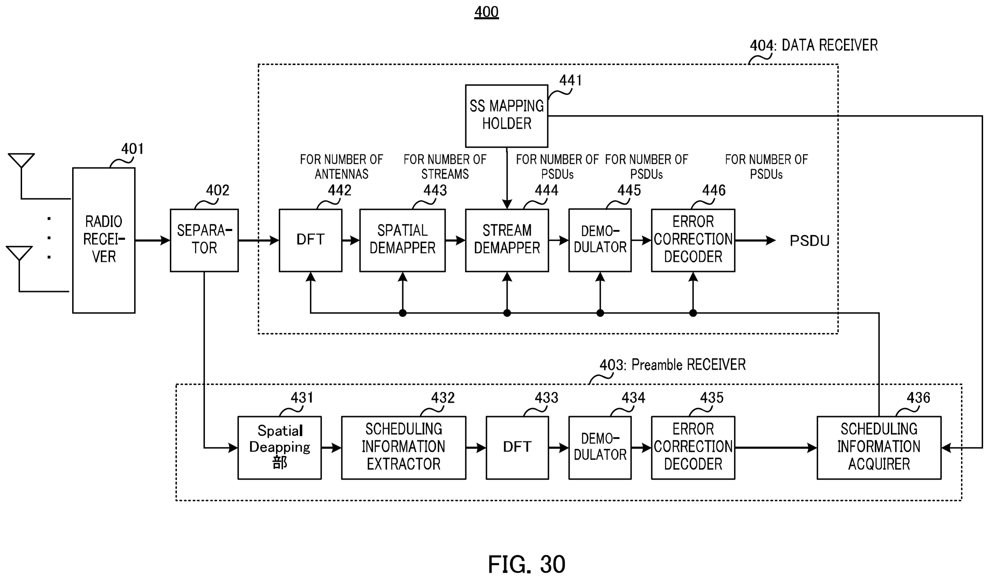

FIG. 30 is a block diagram illustrating a configuration example of terminal 400.

Terminal 400 illustrated in FIG. 30 may include, for example, radio receiver 401, separator 402, Preamble receiver 403, and data receiver 404.

Note that at least one of separator 402, Preamble receiver 403, and data receiver 404 illustrated in FIG. 30 may be included in the controller illustrated in FIG. 28, and radio receiver 401 illustrated in FIG. 30 may be included in the receiver illustrated in FIG. 28.

In FIG. 30, radio receiver 401 receives a signal transmitted from AP 300, for example, via antennas, performs radio reception processing, such as a down-conversion to a baseband and an A/D conversion, on the received signal, and outputs the signal after the radio reception processing to separator 402.

Separator 402 separates the signal (PPDU) input from radio receiver 401 into a Preamble signal and a data signal, outputs the Preamble signal to Preamble receiver 403 (for example, spatial demapper 431), and outputs the data signal to data receiver 404 (for example, DFT processor 442).

Preamble receiver 403 performs processing of receiving the Preamble signal.

Preamble receiver 403 may include, for example, spatial demapper 431, scheduling information extractor 432, DFT processor 433, demodulator 434, error correction decoder 435, and scheduling information acquirer 436.

Spatial demapper 431 combines the Preamble signals for respective antennas input from separator 402 and outputs the combined Preamble signal to scheduling information extractor 432.

Scheduling information extractor 432 extracts the OFDM signal including the scheduling information from the Preamble signal input from spatial demapper 431, and outputs the extracted OFDM signal to DFT processor 433.

DFT processor 433 removes a CP from the OFDM signal including the scheduling information, performs a DFT to convert the OFDM signal into a frequency domain signal, and outputs the signal to demodulator 434.

Demodulator 434 performs demodulation processing on the signal including the scheduling information by a predetermined modulation scheme, and outputs the signal including the scheduling information after the demodulation to error correction decoder 435.

Error correction decoder 435 decodes the signal including the scheduling information input from demodulator 434 at a predetermined coding rate to obtain the scheduling information from AP 300. Error correction decoder 435 outputs the decoded scheduling information to scheduling information acquirer 436.

Scheduling information acquirer 436 acquires the control information on downlink multi-layer reception from the terminal-specific information included in the scheduling information, based on the mapping table between the number of SSs and the number of PSDUs from data receiver 404 (for example, SS mapping holder 441), in accordance with the known predetermined format between the transmission and the reception sides. Scheduling information acquirer 436 outputs the acquired control information on the downlink multi-layer reception to data receiver 404.

Data receiver 404 receives downlink data.

Data receiver 404 may include, for example, SS mapping holder 441, DFT processor 442, spatial demapper 443, stream demapper 444, demodulator 445, and error correction decoder 446.

Data receiver 404 (for example, DFT processor 442) proceeds to reception processing when the signal to be received is determined to be the reception signal addressed to terminal 400, based on the input information from scheduling information acquirer 436.

SS mapping holder 441 operates in the same manner as SS mapping holder 331 included in AP 300. For example, SS mapping holder 441 holds the same mapping table between the number of SSs and the number of PSDUs as the mapping table held by AP 300, and outputs the mapping table to stream demapper 444.

DFT processor 442 removes a CP and performs a DFT to convert the data signal into a frequency domain signal for each of the data signals corresponding to the number of reception antennas input from separator 402. DFT processor 442 demaps (extracts) the signal from terminal 400 from a predetermined transmission bandwidth of the frequency-domain signal, based on the scheduling information (radio resource information or the like) on the downlink signal for terminal 400 provided by scheduling information acquirer 436. DFT processor 442 outputs the extracted data signals corresponding to the number of reception antennas of terminal 400 to spatial demapper 443.

Spatial demapper 443 calculates a postcoding matrix (also referred to as a receive weight) with dimensions of the number of SSs × the number of reception antennas, based on the scheduling information (for example, the number of SSs) for terminal 400 from scheduling information acquirer 436, by using a reference signal for data demodulation included in the data signal. Spatial demapper 443 calculates the stream signals corresponding to the number of SSs by multiplying the data signals input from DFT processor 442 by the postcoding matrix, and outputs the calculated stream signals corresponding to the number of SSs to stream demapper 444.

Stream demapper 444 extracts one or more PSDU signals from the stream signals corresponding to the number of SSs based on the mapping between the number of SSs and the number of PSDUs from SS mapping holder 441. For example, in a case where downlink multi-layer reception is applied and one PSDU is assigned to a plurality of SSs, stream demapper 444 combines the stream signals having predetermined SS numbers to generate one PSDU. Stream demapper 444 outputs the extracted one or more PSDU signals to demodulator 445.

Demodulator 445 performs demodulation processing on the one or more (two or more in a case of multi-layer reception) PSDU signals before demodulation input from stream demapper 444, based on the scheduling information (for example, modulation scheme) for terminal 400 from scheduling information acquirer 436, and outputs the one or more PSDU signals after the demodulation to error correction decoder 446.

Error correction decoder 446 decodes the one or more PSDU signals input from demodulator 445 based on the scheduling information (for example, coding rate) for terminal 400 from scheduling information acquirer 436, and obtains one or more PSDUs from AP 300.

### [Operation Examples of AP 300 and Terminal 400]

Next, operation examples of AP 300 and terminal 400 according to the present embodiment will be described.

AP 300 applies, for terminal 400, an independent MCS to each of one or more data (PSDUs) by using a control signal (for example, Preamble) including terminal-common information and terminal-specific information, and indicates, to terminal 400, reception using different SSs (multi-layer reception using different SSs). For example, AP 300 includes information indicating multi-layer reception using different SSs in one piece of terminal-specific information (for example, User field).

In the present embodiment, the number of PSDUs received by terminal 400 is configured (or restricted) to be a predetermined number (for example, two) or less. Furthermore, in the present embodiment, as in Embodiment 1, the number of SSs and the number of PSDUs are uniquely associated with each other, and the correspondence relationship between the number of SSs and the number of PPDUs is defined in advance. This allows for the indication of downlink multi-layer reception using different SSs by one piece of terminal information (for example, User field).

Therefore, AP 300 can indicate downlink multi-layer reception using different SSs to terminal 400 with a reduced overhead and an easy implementation.

In the following, an example of the User field of the Preamble generated by AP 300 (for example, SS mapping holder 331 and terminal-specific information generator 333) will be described.

For the mapping table between the number of SSs and the number of PSDUs held by SS mapping holder 331, for example, the mapping table illustrated in Embodiment 1 may be used. Alternatively, different mapping tables may be defined for the downlink multi-layer transmission described in Embodiment 2 and the uplink multi-layer transmission described in Embodiment 1.

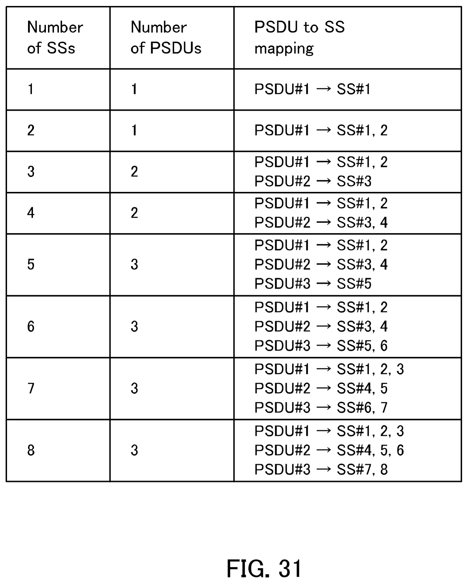

For example, in a case where the maximum number of SSs per terminal in downlink communication is larger than that in uplink communication, the maximum number of PSDUs may be different between the downlink and the uplink communications. For example, in a case where the maximum number of SSs per terminal in downlink communication is eight and the maximum number of SSs per terminal in uplink communication is four, the mapping table with a maximum PSDU count of two as illustrated in FIG. 13 may be applied to the uplink communication, and the mapping table with a maximum PSDU count of three as illustrated in FIG. 31 may be applied to the downlink communication.

In addition, for example, multi-layer reception may be applied in the case of a predetermined PPDU type (or predetermined transmission method), and multi-layer reception need not be applied in the case of another PPDU type (another transmission method). For example, multi-layer reception may be applied in a case where the PPDU type is Non-MU-MIMO allocation. For example, in a case where the PPDU type is Non-MU-MIMO allocation, and the number of SSs is greater than a threshold value, multi-layer reception may be applied (for example, the number of PSDUs to be associated is set to be greater than one), and in a case where the number of SSs is equal to or less than the threshold value, single-layer reception (the number of PSDUs is one) may be applied. On the other hand, in a case where the PPDU type is not Non-MU-MIMO allocation (for example, in the case of MU-MIMO transmission), single-layer reception (the number of PSDUs is one) may be applied regardless of the number of SSs.

In the present embodiment, as in Embodiment 1, multi-layer transmission may be applied when the number of SSs is equal to or greater than a predetermined threshold value.

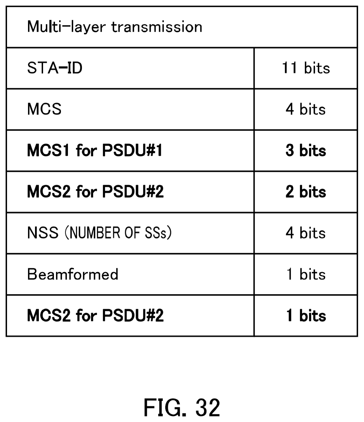

In the present embodiment, the format of the User field may be switched depending on whether a single-layer transmission or a multi-layer transmission is performed, as in Configuration Example 1 of Embodiment 1. For example, in a case where the number of SSs is equal to or smaller than two, the User field illustrated in FIG. 8 may be applied, and a single-layer reception may be performed. On the other hand, in a case where the number of SSs is equal to or larger than three, the User field illustrated in FIG. 32 may be applied, and a multi-layer reception may be performed. As illustrated in FIG. 32, in multi-layer reception, the MCS field, the Reserved field, and the Coding field of the User field for single-layer reception illustrated in FIG. 8 may be replaced with the MCS of PSDU#1 and the MCS of PSDU#2. In the multi-layer reception, the coding field can be used for the MCS notification of PSDU#2 by fixing the coding type (for example, to LDPC). In addition, in multi-layer reception, some of the 4-bit MCS indexes may be omitted, and an MCS field with a reduced bit length of three bits may be used.

As described above, in downlink multi-layer reception, AP 300 can indicate multi-layer reception using the User field having the same size as the existing format (11ax, 11be) by configuring one or some parameters (for example, coding scheme) as fixed values and using the field for the MCS notification for another PSDU (PSDU#2). This reduces the amount of signaling and makes the implementation easy.

Note that the method described in Embodiment 1 may be similarly applied to Embodiment 2.

As described above, in the present embodiment, AP 300 includes control information in one User field in a Preamble including a Common field and a User Specific field (including the User field). The control information indicates that a predetermined number or fewer of PSDU data to which different MCSs are applied, are received by using different SSs (multi-layer reception). AP 300 then transmits the Preamble. Terminal 400 receives the Preamble including the Common field and the User Specific field. In the Preamble, control information indicating that PSDU data which are less than or equal to a predetermined number (for example, two) and to which different MCSs are applied, are received by using different SSs (multi-layer reception) is included in one User field. Terminal 400 controls the reception of PSDU based on the Preamble.

Accordingly, the indication of multi-layer reception can be performed by one User field as in the existing format (for example, 11ax and 11be), and thus the increase in the amount of signaling can be suppressed.

In addition, terminal 400 can complete the processing of receiving control information on multi-layer reception, by using one User field, and can start the next processing (for example, downlink data reception processing), and thus the complexity of implementation can be suppressed.

Therefore, according to the present embodiment, the efficiency of transmission control in radio communication (for example, multi-layer reception control) can be improved.

The embodiments of the present disclosure have been each described, thus far.

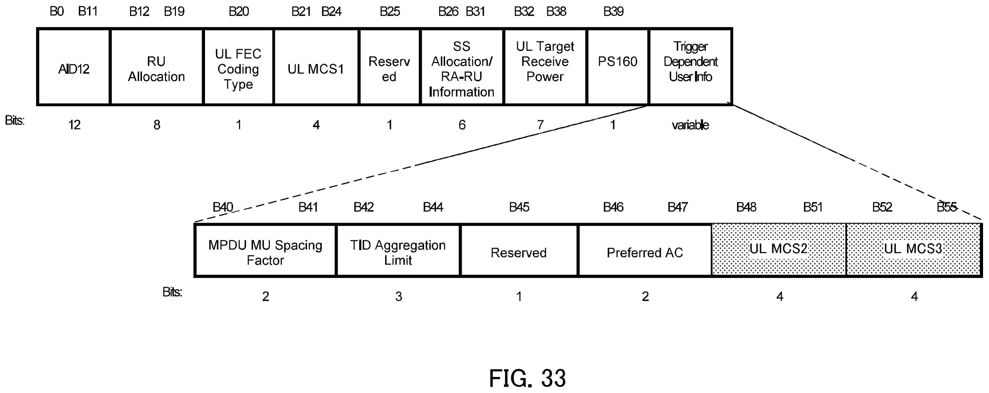

In the above-described embodiment, a case has been described where the number of PSDUs is configured to two or less in multi-layer transmission and multi-layer reception, but multi-layer transmission and multi-layer reception including three or more PSDUs may be applied. For example, in a case where the number of PSDUs is three in Configuration Example 2 of Embodiment 1, the User Info field illustrated in FIG. 33 may be used. In FIG. 33, subfields for indicating the MCSs of PSDU#2 and PSDU#3 are provided in the Trigger Dependent User Info subfield.

The above-described embodiments may be combined with multi-layer transmission in which a plurality of PSDUs is assigned to different resource units (RUs, transmission bandwidths). For example, multi-layer transmission using different RUs may be indicated using a plurality of User Info fields. For example, the same terminal ID is indicated in the AID12 subfield of each of the User Info fields. Then, in each of the User Info fields, as shown in the above-described embodiments, multi-layer transmission or multi-layer reception with different SSs may be indicated.

In addition, in the specific examples in the above-described embodiments, the example in the MCS suitable for each of the PSDUs is assigned has been mainly described, but the PHY parameter to be assigned to each of the PSDUs is not limited to the MCS, and another PHY parameter may be configured. For example, one or a combination of the modulation scheme, the coding scheme, the coding rate, the SS position, and/or the number of SSs may be assigned to each of the PSDUs as the PHY parameter based on the required quality of each of the PSDUs. The method for indication when the PHY parameter is assigned to the PSDU is not limited to using an MCS number, and a number may be assigned solely to a modulation scheme to indicate only the modulation scheme, or a number may be assigned to another PHY parameter such as the coding scheme or to a combination of some of the PHY parameters, the PHY parameter may be indicated with the parameter number.

In the above-described embodiment, a flag indicating whether to apply multi-layer transmission or multi-layer reception may be indicated. For example, the flag may be indicated by using the Reserved (for example, B37 to B39 in FIG. 6) of the Special User Info field including the terminal-common information of the Trigger frame. For example, a one-bit flag is provided, and when the flag indicates zero, the format of the terminal-specific information in which the number of PSDUs is one (always single-layer transmission) regardless of the number of SSs may be applied, and when the flag indicates one, the format of the terminal-specific information in which the number of PSDUs is configured according to the number of SSs (multi-layer transmission described in the above embodiment) may be applied.

PSDU#1 and PSDU#2 in the above-described embodiments may be referred to as a main PSDU and a sub PSDU, respectively, may be referred to as baseline information and enhanced information, respectively, or may be referred to by other names.

The PSDU in the above-described embodiments is also referred to as a codeword. In addition, the above-described embodiments are not limited to being applied to a PSDU defined by the standard, and may be applied to a data block in which the data transmitted by one PPDU is divided into a plurality of groups.

In the above-described embodiment, an example has been described in which the number of SSs and the number of PSDUs are associated with each other, but the present disclosure is not limited thereto, and the control information (for example, the number of SSs, the number of PSDUs, the stream mapping, the transmission power ratio information, and the like) included in the terminal-specific information (User Info field or User field) may be indicated in independent subfields, respectively. This allows the AP to flexibly schedule the terminal.

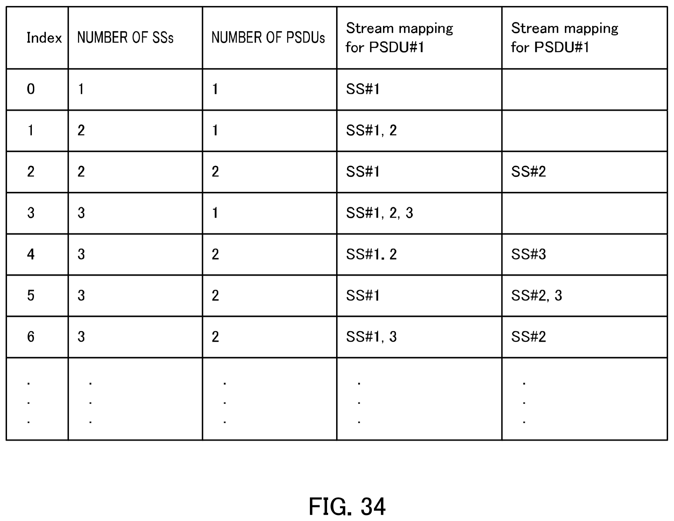

Furthermore, as illustrated in FIG. 34, some or all pieces of the control information may be tabularized (also referred to as joint coding), and an index corresponding to any of the candidates for the combination (pattern) of the control information may be indicated. This makes it possible to reduce signaling amount by joint coding the combination of the necessary control information.

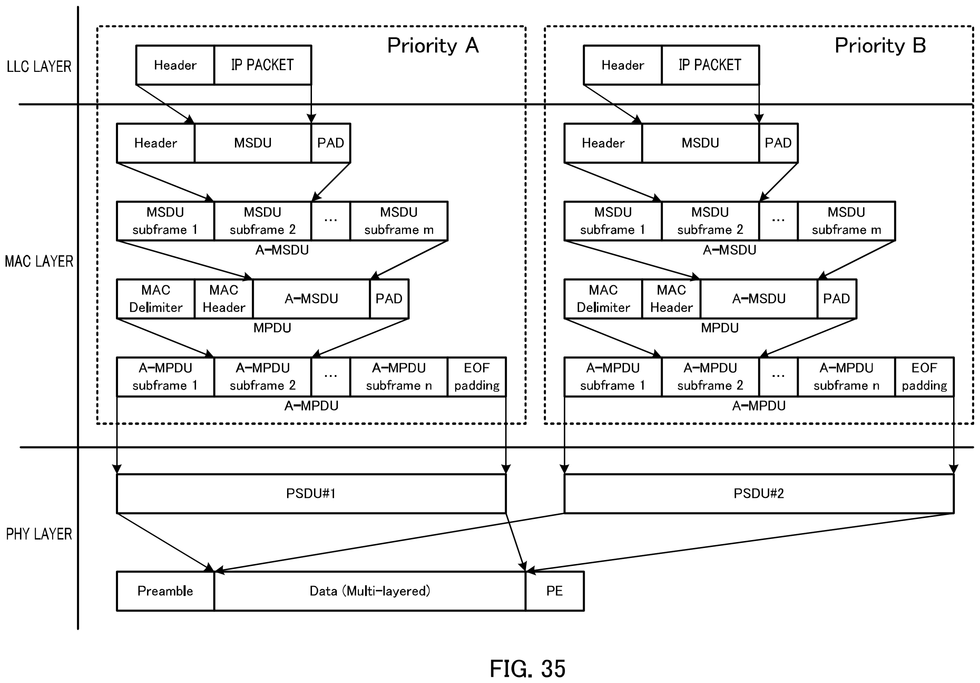

In the above-described embodiment, for example, as illustrated in FIG. 35, a plurality of PSDUs (PSDUs less than or equal to a predetermined number) that is multi-layer transmitted and received may be generated from different data having different QoS (priority, required quality, or the like) for each PSDU. In FIG. 34, for example, among an I-frame (also referred to as a key frame), a P-frame, and a B-frame used in inter-frame video coding, an I-frame may be assigned to Priority A and P/B-frames to Priority B, and PSDUs may be each generated. In hierarchical video coding, a base layer may be assigned to Priority A and an enhancement layer to Priority B, and PSDUs may be each generated.

In addition, the format of the signal described in each of the above embodiments is merely an example, and another configuration may be employed in which at least one of the addition of another field and the deletion of some of the fields is performed, or another configuration may be employed in which at least one of the addition of another subfield and the deletion of some of the subfields is performed in any of the above-described fields.

Furthermore, in each embodiment described above, as an example, a case based on the format defined in IEEE 802.11 has been described, but the format to which an embodiment of the present disclosure is applied is not limited to the format of IEEE 802.11.

The values of the parameters, such as the size (number of bits) of each field or subfield, the coding rate, the modulation scheme, the number of SSs, the number of PSDUs, and the threshold value of the number of SSs associated with the number of PSDUs, used in each of the above embodiments are merely examples, and other values may be used. The association between the number of SSs and the number of PSDUs, or the association between the SS number and the PSDU number is also merely an example, and other associations may be used.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a radio LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to an embodiment of the present disclosure includes: control circuitry, which, in operation, includes, in a control signal including terminal-common information common to a plurality of terminals and terminal-specific information specific to each of the plurality of terminals, control information in one piece of the terminal-specific information, the control information indicating that data which are less than or equal to a predetermined number and to which modulation and coding schemes different from each other are applied, are transmitted or received using spatial streams different from each other; and transmission circuitry, which, in operation, transmits the control signal.

In the embodiment of the present disclosure, the control signal is a trigger frame indicating uplink transmission to a terminal.

In the embodiment of the present disclosure, a trigger type of the trigger frame includes a first type indicating transmission or reception using the spatial streams different from each other, and in a case where the trigger type is the first type, information related to at least one of the modulation and coding schemes for at least one piece of the data less than or equal to the predetermined number is included in a subfield dependent on the trigger type in the terminal-specific information.

In the embodiment of the present disclosure, a physical (PHY) version of the trigger frame includes a first version corresponding to transmission or reception using the spatial streams different from each other, and in a case where the PHY version is the first version, information related to the modulation and coding schemes for the data less than or equal to the predetermined number is included in the terminal-specific information.

In the embodiment of the present disclosure, the control signal is a Preamble that indicates downlink reception to a terminal.

In the embodiment of the present disclosure, the predetermined number is two.

In the embodiment of the present disclosure, a number of the spatial streams and a number of the data less than or equal to the predetermined number are uniquely associated with each other.

In the embodiment of the present disclosure, the control information includes information for identifying any one of a plurality of mapping tables indicating an association between the number of the spatial streams and the number of the data.

In the embodiment of the present disclosure, the number of the data associated with the number of the spatial streams is one in a case where the number of the spatial streams is less than or equal to a threshold value, and the number of the data associated with the number of the spatial streams is greater than one in a case where the number of the spatial streams is greater than the threshold value.

In the embodiment of the present disclosure, one or some of subfields of the terminal-specific information include different information between a case where a number of the data is greater than one and a case where the number of the data is one.

In the embodiment of the present disclosure, a number given to each of the spatial streams and a number given to each of the data less than or equal to the predetermined number are uniquely associated with each other.

In the embodiment of the present disclosure, the control information includes information for identifying any one of a plurality of mapping tables indicating an association between the number given to each of the spatial streams and the number given to each of the data less than or equal to the predetermined number.

In the embodiment of the present disclosure, a number of the spatial streams and a number of the data less than or equal to the predetermined number are uniquely associated with each other, and the association between the number of the spatial streams and the number of the data varies depending on a method for transmission of the data.

In the embodiment of the present disclosure, the number of the data associated when the number of the spatial streams is greater than a threshold value is greater than one, in a case where the method for transmission is non-Multi User (MU)-Multiple Input Multiple Output (MIMO), and the number of the data is one regardless of the number of the spatial streams, in a case where the method for transmission is MU-MIMO.

In the embodiment of the present disclosure, each of the data less than or equal to the predetermined number is data having a different required quality.

A terminal according to an embodiment of the present disclosure includes: reception circuitry, which, in operation, receives a control signal including terminal-common information common to a plurality of terminals and terminal-specific information specific to each of the plurality of terminals, the control signal including, in one piece of the terminal-specific information, control information indicating that data which are less than or equal to a predetermined number and to which modulation and coding schemes different from each other are applied, are transmitted or received using spatial streams different from each other; and control circuitry, which, in operation, controls transmission or reception of the data based on the control signal.

In a communication metho according to an embodiment of the present disclosure, an access point includes, in a control signal including terminal-common information common to a plurality of terminals and terminal-specific information specific to each of the plurality of terminals, control information in one piece of the terminal-specific information, the control information indicating that data which are less than or equal to a predetermined number and to which modulation and coding schemes different from each other are applied, are transmitted or received using spatial streams different from each other, and the access point transmits the control signal.

In a communication metho according to an embodiment of the present disclosure, a terminal receives a control signal including terminal-common information common to a plurality of terminals and terminal-specific information specific to each of the plurality of terminals, the control signal including, in one piece of the terminal-specific information, control information indicating that data which are less than or equal to a predetermined number and to which modulation and coding schemes different from each other are applied, are transmitted or received using spatial streams different from each other, and the terminal controls transmission or reception of the data based on the control signal.

The disclosure of Japanese Patent Application No. 2023-077170, filed on May 9, 2023, including the specification, drawings and abstract, is incorporated herein by reference in its entirety.

### Industrial Applicability

An exemplary embodiment of the present disclosure is useful for radio communication systems.

### Reference Signs List

100, 300 AP
101, 301 Scheduler
102, 205, 302 Data generator
103, 206, 303 Preamble generator
104, 207, 304 PPDU generator
105, 201 Radio transceiver
106, 202, 402 Separator
107, 203, 403 Preamble receiver
108, 204, 404 Data receiver
121, 246, 331, 441 SS mapping holder
122, 332 Terminal-common information generator
123, 333 Terminal-specific information generator
124 TF generator
125, 252, 322, 335 Error correction encoder
126, 253, 323, 336 Modulator
127, 254, 324 Stream mapper
128, 255, 325, 340 Spatial mapper
129, 256, 326, 337 IDFT processor
181 Scheduling information holder
182, 241, 433, 442 DFT processor
183, 242, 431, 443 Spatial demapper
184, 243, 444 Stream demapper
185, 244, 434, 445 Demodulator
186, 245, 435, 446 Error correction decoder
200, 400 Terminal
247 TF receiver
251, 321 PSDU generator
305 Radio transmitter
334 Scheduling information generator
338 Known signal generator
339 Multiplexer
401 Radio receiver
432 Scheduling information extractor
436 Scheduling information acquirer

## Claims

1. An access point, comprising:
control circuitry, which, in operation, includes, in a control signal including terminal-common information common to a plurality of terminals and terminal-specific information specific to each of the plurality of terminals, control information in one piece of the terminal-specific information, the control information indicating that data which are less than or equal to a predetermined number and to which modulation and coding schemes different from each other are applied, are transmitted or received using spatial streams different from each other; and
transmission circuitry, which, in operation, transmits the control signal.

2. The access point according to claim 1, wherein
the control signal is a trigger frame indicating uplink transmission to a terminal.

3. The access point according to claim 2, wherein
a trigger type of the trigger frame includes a first type indicating transmission or reception using the spatial streams different from each other, and
in a case where the trigger type is the first type, information related to at least one of the modulation and coding schemes for at least one piece of the data less than or equal to the predetermined number is included in a subfield dependent on the trigger type in the terminal-specific information.

4. The access point according to claim 2, wherein
a physical (PHY) version of the trigger frame includes a first version corresponding to transmission or reception using the spatial streams different from each other, and
in a case where the PHY version is the first version, information related to the modulation and coding schemes for the data less than or equal to the predetermined number is included in the terminal-specific information.

5. The access point according to claim 1, wherein
the control signal is a Preamble that indicates downlink reception to a terminal.

6. The access point according to claim 1, wherein
the predetermined number is two.

7. The access point according to claim 1, wherein
a number of the spatial streams and a number of the data less than or equal to the predetermined number are uniquely associated with each other.

8. The access point according to claim 7, wherein
the control information includes information for identifying any one of a plurality of mapping tables indicating an association between the number of the spatial streams and the number of the data.

9. The access point according to claim 7, wherein
the number of the data associated with the number of the spatial streams is one in a case where the number of the spatial streams is less than or equal to a threshold value, and
the number of the data associated with the number of the spatial streams is greater than one in a case where the number of the spatial streams is greater than the threshold value.

10. The access point according to claim 1, wherein
one or some of subfields of the terminal-specific information include different information between a case where a number of the data is greater than one and a case where the number of the data is one.

11. The access point according to claim 1, wherein
a number given to each of the spatial streams and a number given to each of the data less than or equal to the predetermined number are uniquely associated with each other.

12. The access point according to claim 11, wherein
the control information includes information for identifying any one of a plurality of mapping tables indicating an association between the number given to each of the spatial streams and the number given to each of the data less than or equal to the predetermined number.

13. The access point according to claim 1, wherein
a number of the spatial streams and a number of the data less than or equal to the predetermined number are uniquely associated with each other, and the association between the number of the spatial streams and the number of the data varies depending on a method for transmission of the data.

14. The access point according to claim 13, wherein
the number of the data associated when the number of the spatial streams is greater than a threshold value is greater than one, in a case where the method for transmission is non-Multi User (MU)-Multiple Input Multiple Output (MIMO), and
the number of the data is one regardless of the number of the spatial streams, in a case where the method for transmission is MU-MIMO.

15. The access point according to claim 1, wherein
each of the data less than or equal to the predetermined number is data having a different required quality.

16. A terminal, comprising:
reception circuitry, which, in operation, receives a control signal including terminal-common information common to a plurality of terminals and terminal-specific information specific to each of the plurality of terminals, the control signal including, in one piece of the terminal-specific information, control information indicating that data which are less than or equal to a predetermined number and to which modulation and coding schemes different from each other are applied, are transmitted or received using spatial streams different from each other; and
control circuitry, which, in operation, controls transmission or reception of the data based on the control signal.

17. A communication method, comprising:
including, by an access point, in a control signal including terminal-common information common to a plurality of terminals and terminal-specific information specific to each of the plurality of terminals, control information in one piece of the terminal-specific information, the control information indicating that data which are less than or equal to a predetermined number and to which modulation and coding schemes different from each other are applied, are transmitted or received using spatial streams different from each other; and
transmitting, by the access point, the control signal.

18. A communication method, comprising:
receiving, by a terminal, a control signal including terminal-common information common to a plurality of terminals and terminal-specific information specific to each of the plurality of terminals, the control signal including, in one piece of the terminal-specific information, control information indicating that data which are less than or equal to a predetermined number and to which modulation and coding schemes different from each other are applied, are transmitted or received using spatial streams different from each other; and
controlling, by the terminal, transmission or reception of the data based on the control signal.
